# EUROPEAN PATENT SPECIFICATION

(11) **EP 3 800 535 B1**
(45) Date of publication and mention of the grant of the patent: **22.01.2025**
(21) Application number: 18923846.2
(22) Date of filing: 27.06.2018
(51) Int. Cl.: G06F 3/048, H04M 1/725, G06F 3/041, G06F 3/0488

(54) **METHOD AND TERMINAL FOR CONTROLLING SHORTCUT BUTTON**
VERFAHREN UND ENDGERÄT ZUR STEUERUNG EINES TASTATURKÜRZELS
PROCÉDÉ ET TERMINAL DE COMMANDE DE BOUTON DE RACCOURCI

(43) Date of publication of application: 07.04.2021
(73) Proprietor: HUAWEI TECHNOLOGIES CO., LTD., Shenzhen, Guangdong 518129 (CN)
(72) Inventor: XU, Jie, Shenzhen, Guangdong 518129 (CN)
(74) Representative: Goddar, Heinz J.
(86) International application number: PCT/CN2018/093199
(87) International publication number: WO 2020/000276

(56) References cited:
- EP-A1- 2 924 550
- CN-A- 102 855 073
- CN-A- 105 955 608
- CN-A- 107 450 823
- CN-B- 102 625 931
- US-A1- 2010 185 989
- US-A1- 2012 306 788
- US-A1- 2016 286 036

## Description

### TECHNICAL FIELD

This application relates to the field of terminals, and in particular, to a shortcut key control method and a terminal.

### BACKGROUND

Applications (application, APP) installed on a terminal may be displayed on a home screen (home screen, which may also be referred to as a main screen) in a form of icons, to provide entries for entering the related applications for a user. Usually, the user may enter the related applications by tapping these icons and use various application functions provided in the applications.

As functions of terminals become increasingly powerful, a quantity of applications installed on the terminals gradually increases, and application functions provided in the applications also gradually increase. To help a user quickly find and position a required application or application function, some terminals provide shortcut keys of some applications or application functions in a pull-up menu, a drop-down menu, or a leftmost-screen menu. However, to use these shortcut keys, the user needs to first jump to a menu of the shortcut keys and then perform corresponding gestures to trigger the shortcut keys to enter corresponding applications or enable corresponding application functions. As a result, an entire process is relatively cumbersome.

Document US 2010 / 0 185 989 A1 provides a user interface for initiating activities in an electronic device. The user interface includes an element referred to as a "launch wave", which can be activated at substantially any time, even if the user is engaged with an activity, without requiring the user to first return to a home screen. In various embodiments, the user can activate the launch wave by performing a gesture, or by pressing a physical button, or by tapping at a particular location on a touchscreen, or by activating a keyboard command. In one embodiment, activation of the launch wave and selection of an item from the launch wave can be performed in one continuous operation on a touch-sensitive screen, so as to improve the expediency and convenience of launching applications and other items.

### SUMMARY

The invention is set out as in the appended claims. Embodiments of this application provide a shortcut key control method and a terminal, to simplify a process of opening an application or enabling an application function by a user by using a shortcut key, so that the user quickly and conveniently enters the required application or enables the required function.

To achieve the foregoing objective, the following technical solutions are used in this application:

According to a first aspect, an embodiment of this application provides a shortcut key control method, including: A terminal displays a first interface. The terminal receives a first phase of a sliding operation entered by a user in the first interface, where a start location of a finger of the user in the first phase is a point on a first edge in the first interface, and an end location of the finger of the user in the first phase is a point away from the first edge in the first interface. In response to the first phase of the sliding operation, the terminal displays a shortcut menu in the first interface, where the shortcut menu includes at least one shortcut key. Further, the terminal receives a second phase of the sliding operation entered by the user in the first interface, where a start location of the finger of the user in the second phase is the end location of the finger of the user in the first phase, and an end location of the finger of the user in the second phase is a first shortcut key in the shortcut menu. Further, the terminal receives a third phase of the sliding operation entered by the user in the first interface, wherein the third phase is a process in which the finger of the user drags the first shortcut key, a start location of the finger of the user in the third phase is the end location of the finger of the user in the second phase, and an end location of the finger of the user in the third phase is a location at which the finger of the user leaves a touchscreen. The terminal enables a shortcut function corresponding to the first shortcut key in response to the third phase of the sliding operation, wherein the first shortcut key is an icon of a second application. The enabling, by the terminal, a shortcut function corresponding to the first shortcut key comprises: if the terminal detects that the user drags the icon of the second application to slide along a first direction in the third phase of the sliding operation, enabling, by the terminal, a first application function of the second application; if the terminal detects that the user drags the icon of the second application to slide along a second direction in the third phase of the sliding operation, enabling, by the terminal, a second application function of the second application.

Because the first phase and the second phase are consecutive processes of the same sliding operation, the user needs to perform the sliding operation only once on an edge of a touchscreen to implement a series of operations including invoking the shortcut menu, selecting a shortcut key in the shortcut menu, and enabling a shortcut function corresponding to the shortcut key, so that the user can implement a shortcut function in any currently displayed interface by performing the sliding operation once. In other words, the user achieves experience of directly enabling a shortcut function in one step in any scenario. This simplifies a process of enabling a shortcut function by the user by using a shortcut key, so that the user quickly and conveniently enters a required application or enables a required function.

In a possible design method, that the terminal displays the shortcut menu in the first interface includes: the terminal displays the shortcut menu along a second edge in the first interface, where the second edge is an edge closest to the start location of the finger of the user in the first phase, or the second edge is an edge closest to the end location of the finger of the user in the first phase. In this way, after the shortcut menu is displayed, the user may select a corresponding shortcut key in the shortcut menu by sliding for a relatively short distance.

In a possible design method, the first shortcut key in the shortcut menu is on an extended line of a sliding track of the first phase of the sliding operation. In this way, when the first phase of the sliding operation ends, the user does not need to change the sliding track, and can reach the shortcut menu by continuing to slide for a relatively short distance.

In a possible design method, the first edge includes a first portion and a second portion, and that the terminal displays the shortcut menu in the first interface includes: when the start location of the finger of the user in the first phase is in the first portion, the terminal displays a first shortcut menu in the first interface; or when the start location of the finger of the user in the first phase is in the second portion, the terminal displays a second shortcut menu in the first interface. In other words, for sliding operations performed by the user at different locations on a same edge, the terminal may invoke different shortcut menus, to provide more shortcut function options for the user.

In a possible design method, the first shortcut key includes an icon of an application or an icon of an application function.

In a possible design method, the first interface is an interface of the second application. This helps the user quickly enable another application function of a current application when using different applications.

In a possible design method, the second phase of the sliding operation includes a process in which the finger of the user slides from the end location of the finger of the user in the first phase to the first shortcut key; or the second phase of the sliding operation includes a process in which the finger of the user slides from the end location of the finger of the user in the first phase to the first shortcut key, and a process in which the finger of the user stays on the first shortcut key or presses the first shortcut key.

In a possible design method, after the terminal receives the second phase of the sliding operation entered by the user in the first interface, the method further includes: the terminal marks the first shortcut key to a selected state, to remind the user that the first shortcut key has been selected.

In a possible design method, that the terminal enables the shortcut function corresponding to the first shortcut key includes: when the second phase of the sliding operation ends, if the terminal detects that the finger of the user leaves a touchscreen, the terminal enables the shortcut function corresponding to the first shortcut key. In this way, the user can directly enable a shortcut function by performing the sliding operation once in the first interface, thereby simplifying an entire operation process of triggering the shortcut function by the user by using a shortcut key, so that the user achieves experience of directly enabling the shortcut function in one step.

In a possible design method, content displayed in the first interface does not support the shortcut function corresponding to the first shortcut key, and that the terminal enables the shortcut function corresponding to the first shortcut key includes: in response to dragging performed by the user on the first shortcut key in the third phase of the sliding operation, the terminal gradually displays a second interface along a dragging direction, where the second interface is a shortcut function interface corresponding to the first shortcut key. This implements smooth transition from the first interface to the second interface.

In a possible design method, content displayed in the first interface supports the shortcut function corresponding to the first shortcut key, and that the terminal enables the shortcut function corresponding to the first shortcut key includes: the terminal performs, on displayed target content, the shortcut function corresponding to the first shortcut key, where the displayed target content is content corresponding to the end location of the finger of the user in the third phase. In other words, the user may further perform, by performing the third phase of the sliding operation, the shortcut function of the first shortcut key on the content currently displayed in the first interface. In this way, the user can implement, by performing the sliding operation once, a series of operations such as invoking the shortcut menu, selecting the shortcut function, enabling the shortcut function, and using the shortcut function. This greatly improves operation efficiency for the shortcut key in the shortcut menu and user experience of operating the shortcut key.

In a possible design method, after the terminal displays the shortcut menu in the first interface, the method further includes: if the terminal detects that the finger of the user leaves the touchscreen after the finger of the user reaches a first location, the terminal hides the shortcut menu in the first interface, where the first location is any location other than the shortcut menu in the first interface. After the finger of the user slides a distance on the touchscreen, the terminal may display the shortcut menu. If the user does not want to operate the shortcut menu after the shortcut menu is displayed, the user needs only to lift the finger away from the screen to make the shortcut menu disappear on the screen, and no other action is required.

The sliding operation is an operation that the finger of the user does not leave the touchscreen and generates displacement on the touchscreen.

According to a second aspect, this application provides a terminal, including a touchscreen, wherein the touchscreen comprises a touch-sensitive surface and a display, one or more processors, one or more memories, and one or more computer programs, wherein the one or more computer programs are stored in the one or more memories, the one or more computer programs comprise an instruction, and when the instruction is executed by the terminal, the terminal is enabled to perform the foregoing shortcut key control method.

According to a third aspect, this application provides a computer storage medium, including a computer instruction. When the computer instruction is run on a terminal, the terminal is enabled to perform the shortcut key control method according to any one of the implementations of the first aspect.

It may be understood that the terminal according to the second aspect and the computer storage medium according to the third aspect are all configured to perform the corresponding method provided above. Therefore, for beneficial effects that can be achieved by the terminal according to the second aspect and the computer storage medium according to the third aspect refer to the beneficial effects in the corresponding method provided above. Details are not described herein again.

### BRIEF DESCRIPTION OF DRAWINGS

FIG. 1 is a schematic structural diagram 1 of a terminal according to an embodiment of thisapplication;
FIG. 2(a) and FIG. 2(b) are a schematic diagram 1 of a scenario of a shortcut key control method according to an embodiment of this application;
FIG. 3 is a schematic architectural diagram of an operating system of a terminal according to an embodiment of this application;
FIG. 4 is a schematic flowchart of a shortcut key control method according to an embodiment of this application;
FIG. 5 is a schematic diagram 2 of a scenario of a shortcut key control method according to an embodiment of this application;
FIG. 6 is a schematic diagram 3 of a scenario of a shortcut key control method according to an embodiment of this application;
FIG. 7 is a schematic diagram 4 of a scenario of a shortcut key control method according to an embodiment of this application;
FIG. 8 is a schematic diagram 5 of a scenario of a shortcut key control method according to an embodiment of this application;
FIG. 9 is a schematic diagram 6 of a scenario of a shortcut key control method according to an embodiment of this application;
FIG. 10 is a schematic diagram 7 of a scenario of a shortcut key control method according to an embodiment of this application;
FIG. 11 is a schematic diagram 8 of a scenario of a shortcut key control method according to an embodiment of this application;
FIG. 12(a) and FIG. 12(b) are a schematic diagram 9 of a scenario of a shortcut key control method according to an embodiment of this application;
FIG. 13 is a schematic diagram 10 of a scenario of a shortcut key control method according to an embodiment of this application;
location of the finger of the user in the second phase is the end location of the finger of the user in the first phase, and an end location of the finger of the user in the second phase is a first shortcut key in the shortcut menu; and a third GUI displayed on the touchscreen, where the third GUI is an interface of a shortcut function corresponding to the first shortcut key.

In a possible design method, the shortcut menu in the second GUI is on a second edge in the first interface.

In a possible design method, when the start location of the finger of the user in the first phase is in a first portion of the first edge, the second GUI includes a first shortcut menu; or when the start location of the finger of the user in the first phase is in a second portion of the first edge, the second GUI includes a second shortcut menu.

In a possible design method, displaying the third GUI on the touchscreen includes: in response to a third phase of the sliding operation entered by the user in the first interface, displaying the third GUI on the touchscreen, where the third phase is a process in which the finger of the user drags the first shortcut key to slide, a start location of the finger of the user in the third phase is the end location of the finger of the user in the second phase, and an end location of the finger of the user in the third phase is a location at which the finger of the user leaves the touchscreen.

In a possible design method, the first shortcut key is an icon of a second application. If it is detected that the user drags the icon of the second application to slide along a first direction in the third phase of the sliding operation, the third GUI is an interface of a first application function of the second application. If it is detected that the user drags the icon of the second application to slide along a second direction in the third phase of the sliding operation, the third GUI is an interface of a second application function of the second application.

According to a fifth aspect, this application provides a computer storage medium, including a computer instruction. When the computer instruction is run on a terminal, the terminal is enabled to perform the shortcut key control method according to any one of the implementations of the first aspect.

According to a sixth aspect, this application provides a computer program product. When the computer program product is run on a computer, the computer is enabled to perform the shortcut key control method according to any one of the implementations of the first aspect.

It may be understood that the terminal according to the second aspect and the third aspect, the GUI according to the fourth aspect, the computer storage medium according to the fifth aspect, and the computer program product according to the sixth aspect are all configured to perform the corresponding method provided above. Therefore, for beneficial effects that can be achieved by the terminal according to the second aspect and the third aspect, the GUI according to the fourth aspect, the computer storage medium according to the fifth aspect, and the computer program product according to the sixth aspect, refer to the beneficial effects in the corresponding method provided above. Details are not described herein again.

### BRIEF DESCRIPTION OF DRAWINGS

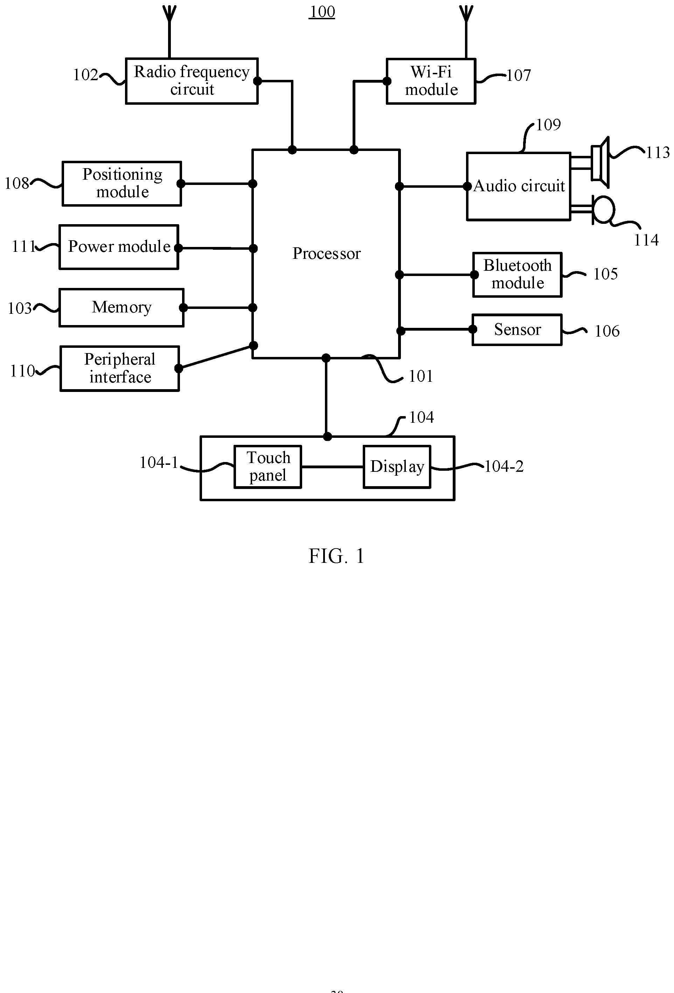

FIG. 1 is a schematic structural diagram 1 of a terminal according to an embodiment of this application;

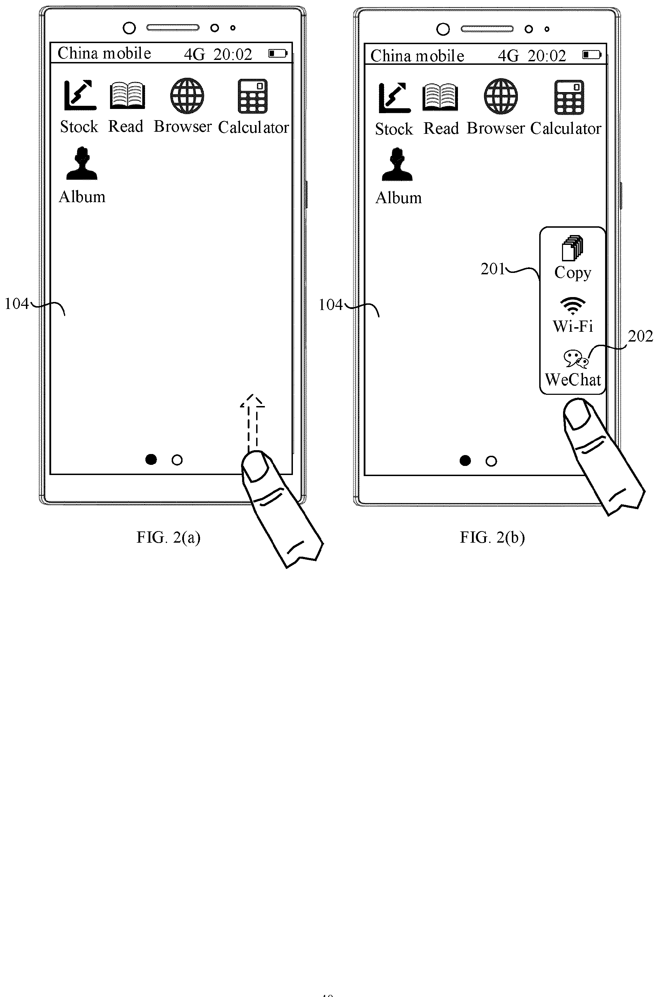

FIG. 2(a) and FIG. 2(b) are a schematic diagram 1 of a scenario of a shortcut key control method according to an embodiment of this application;

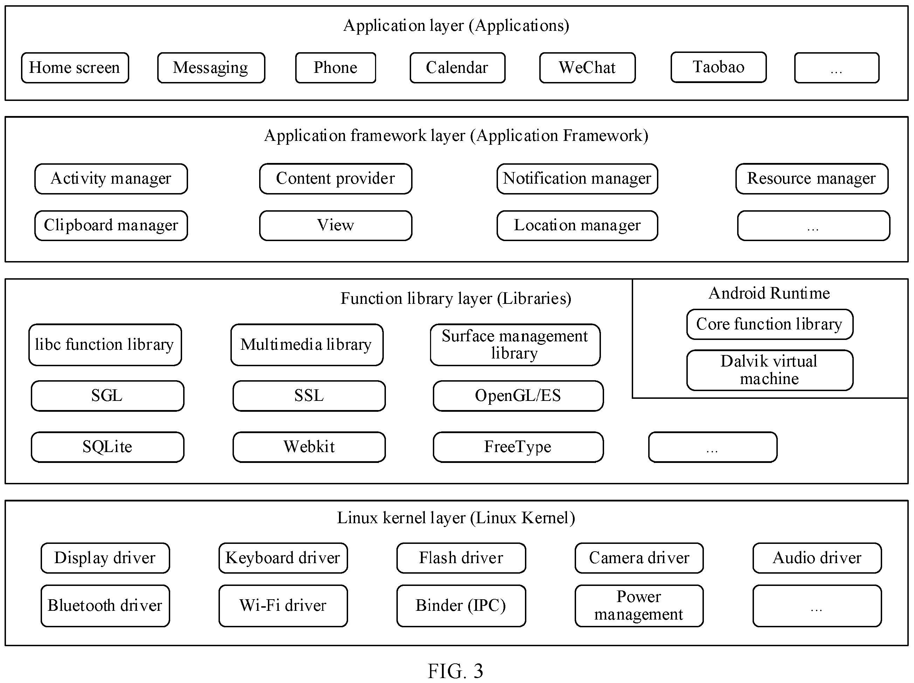

FIG. 3 is a schematic architectural diagram of an operating system of a terminal according to an embodiment of this application;

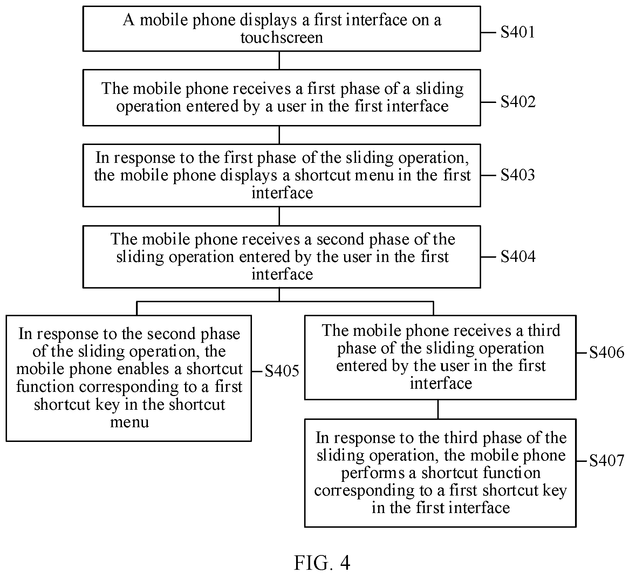

FIG. 4 is a schematic flowchart of a shortcut key control method according to an embodiment of this application;

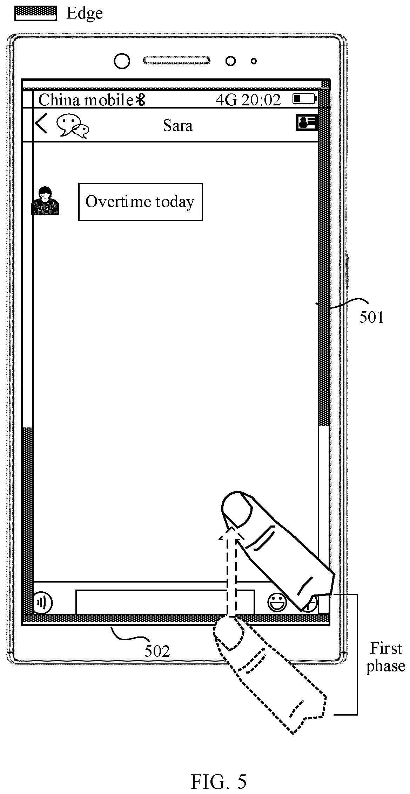

FIG. 5 is a schematic diagram 2 of a scenario of a shortcut key control method according to an embodiment of this application;

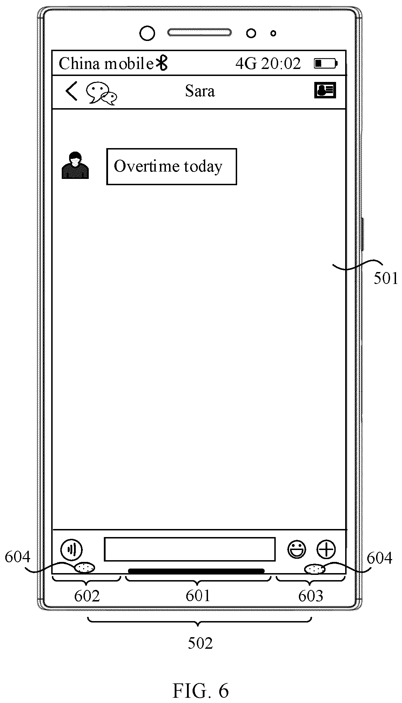

FIG. 6 is a schematic diagram 3 of a scenario of a shortcut key control method according to an embodiment of this application;

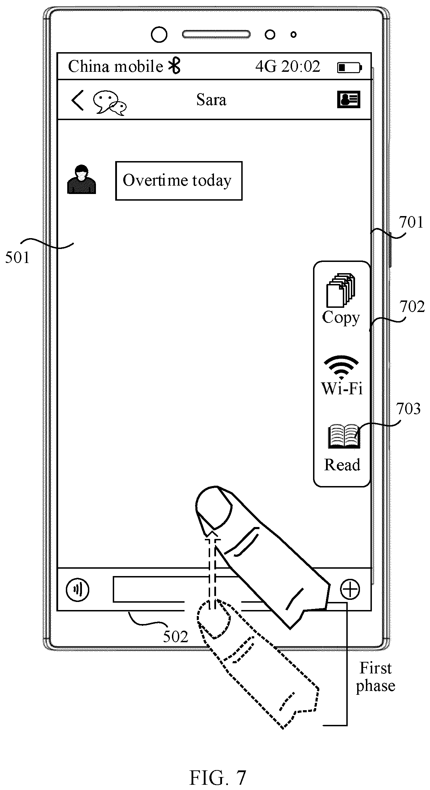

FIG. 7 is a schematic diagram 4 of a scenario of a shortcut key control method according to an embodiment of this application;

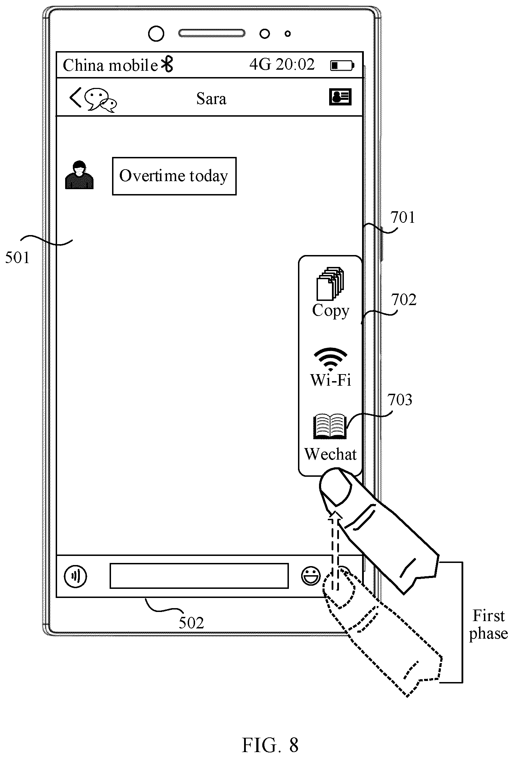

FIG. 8 is a schematic diagram 5 of a scenario of a shortcut key control method according to an embodiment of this application;

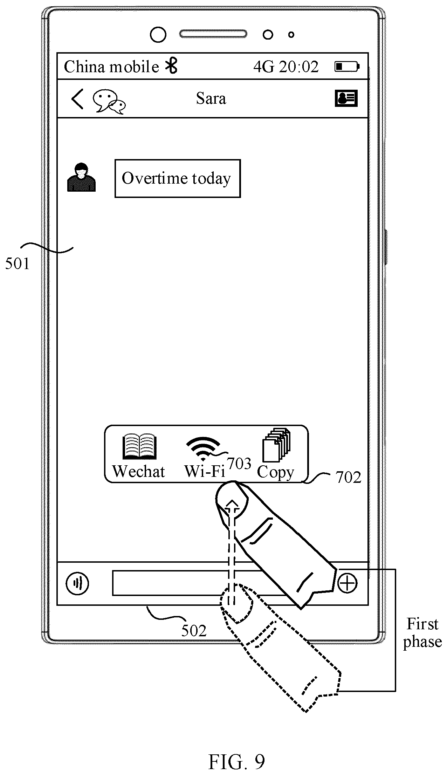

FIG. 9 is a schematic diagram 6 of a scenario of a shortcut key control method according to an embodiment of this application;

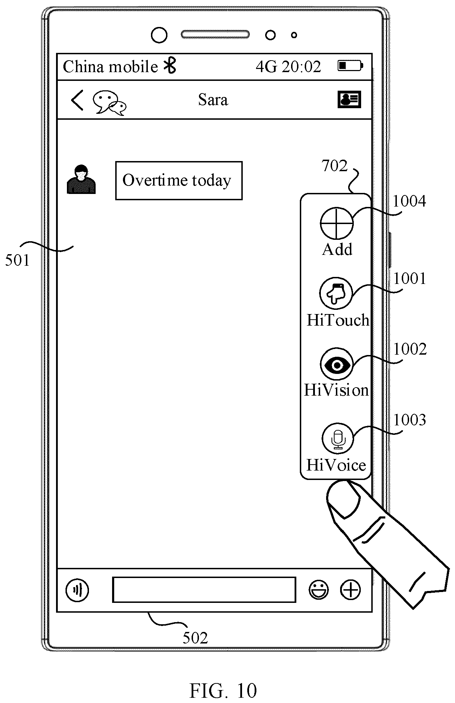

FIG. 10 is a schematic diagram 7 of a scenario of a shortcut key control method according to an embodiment of this application;

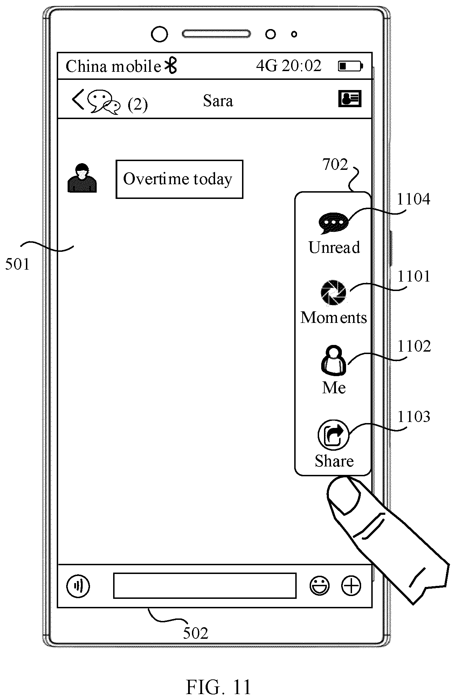

FIG. 11 is a schematic diagram 8 of a scenario of a shortcut key control method according to an embodiment of this application;

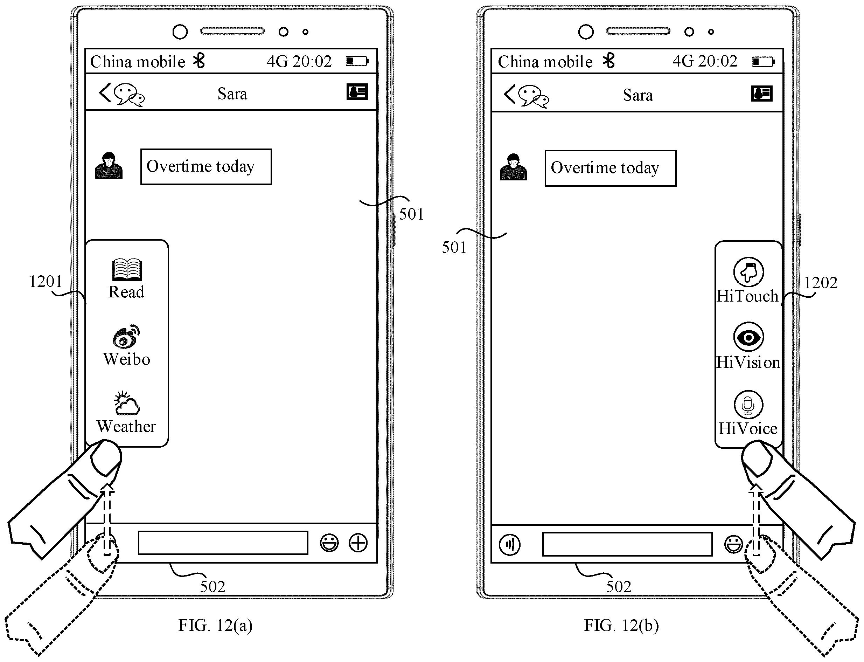

FIG. 12(a) and FIG. 12(b) are a schematic diagram 9 of a scenario of a shortcut key control method according to an embodiment of this application;

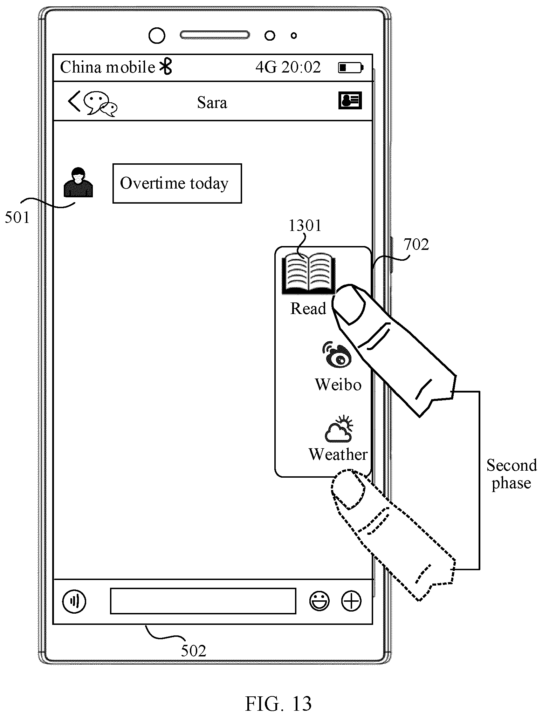

FIG. 13 is a schematic diagram 10 of a scenario of a shortcut key control method according to an embodiment of this application;

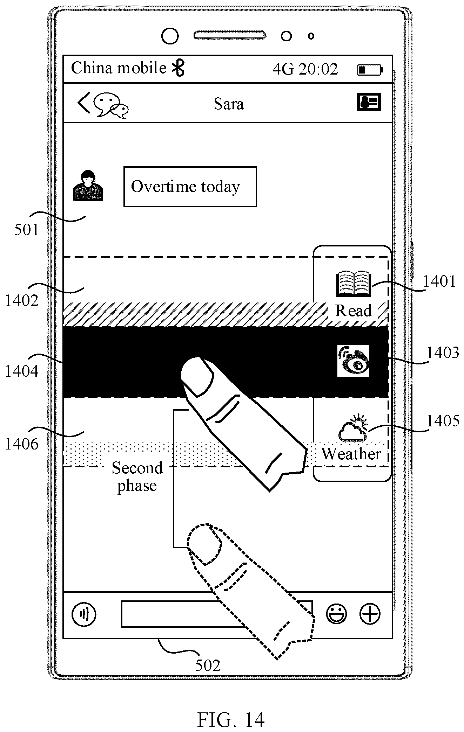

FIG. 14 is a schematic diagram 11 of a scenario of a shortcut key control method according to an embodiment of this application;

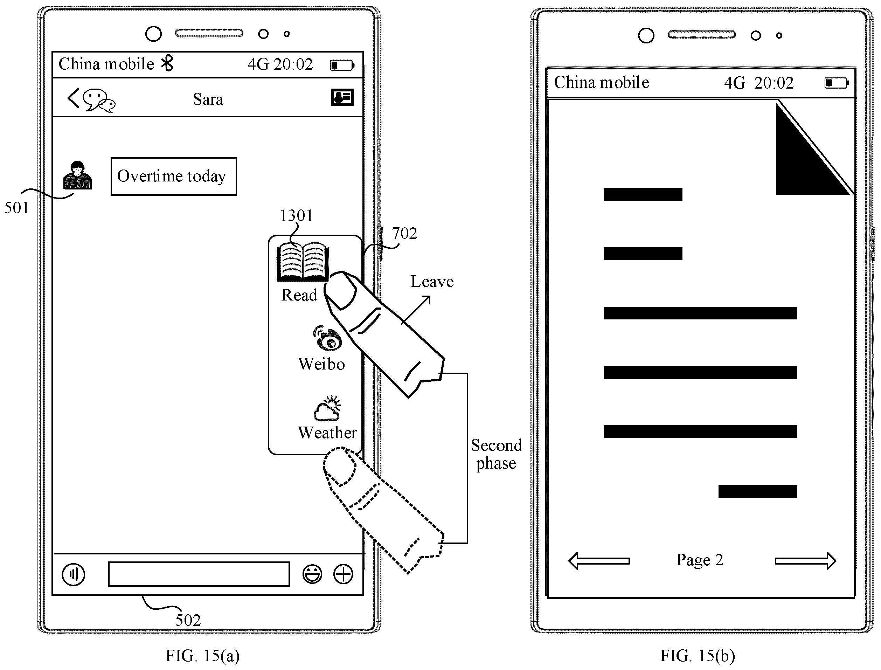

FIG. 15(a) and FIG. 15(b) are a schematic diagram 12 of a scenario of a shortcut key control method according to an embodiment of this application;

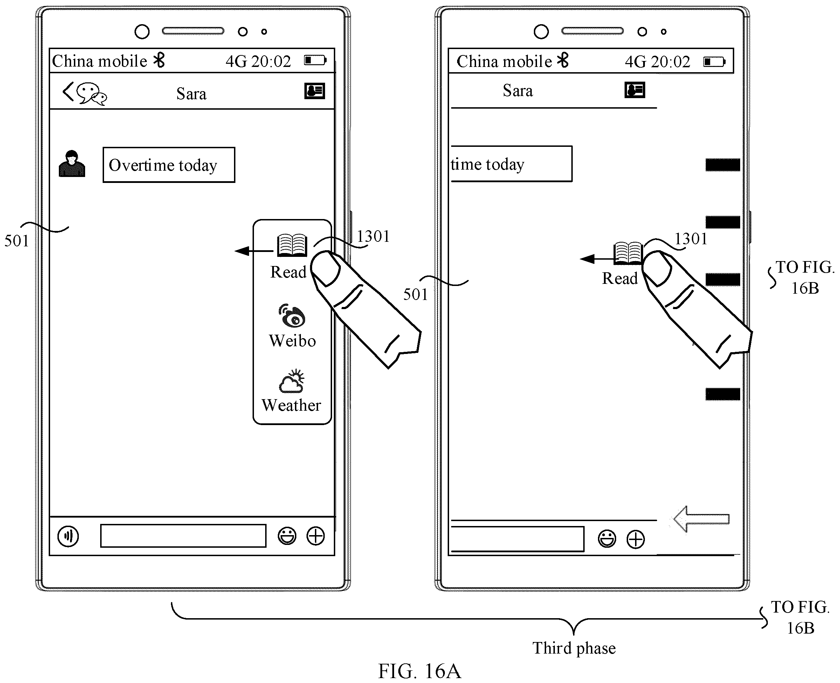

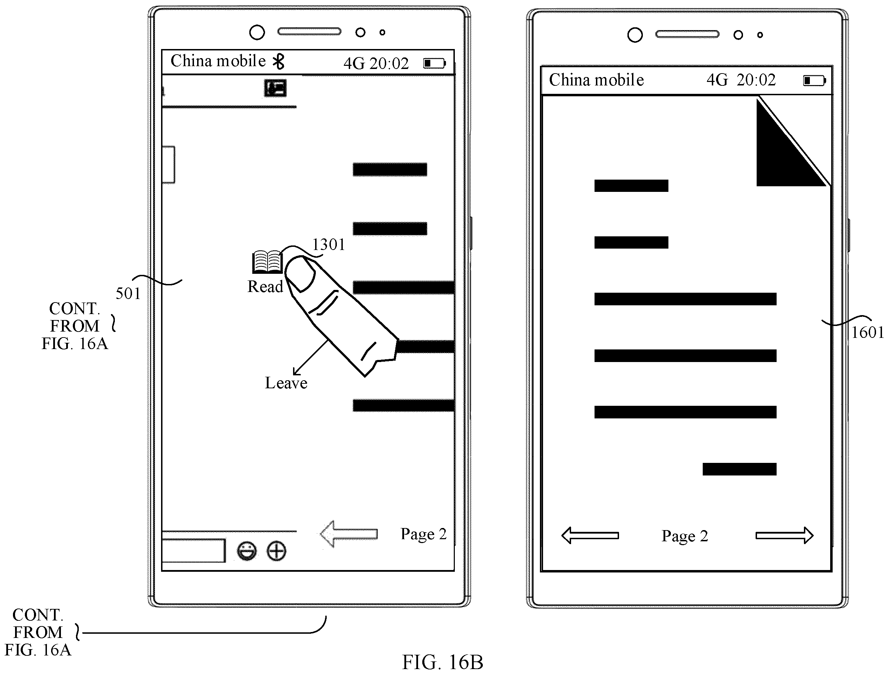

FIG. 16A and FIG. 16B are a schematic diagram 13 of a scenario of a shortcut key control method according to an embodiment of this application;

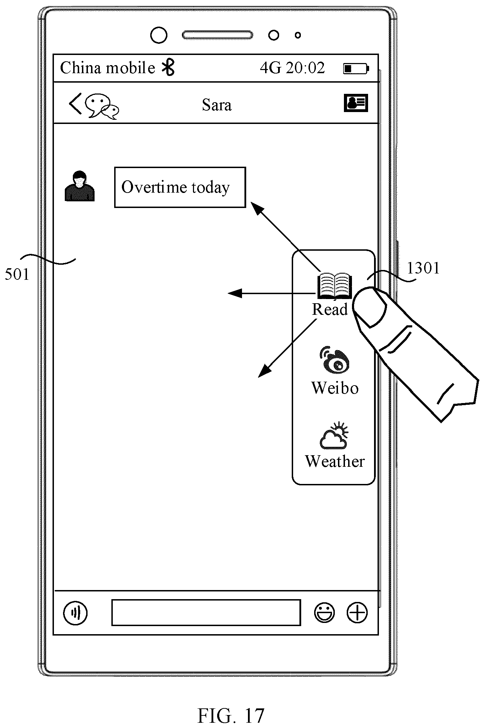

FIG. 17 is a schematic diagram 14 of a scenario of a shortcut key control method according to an embodiment of this application;

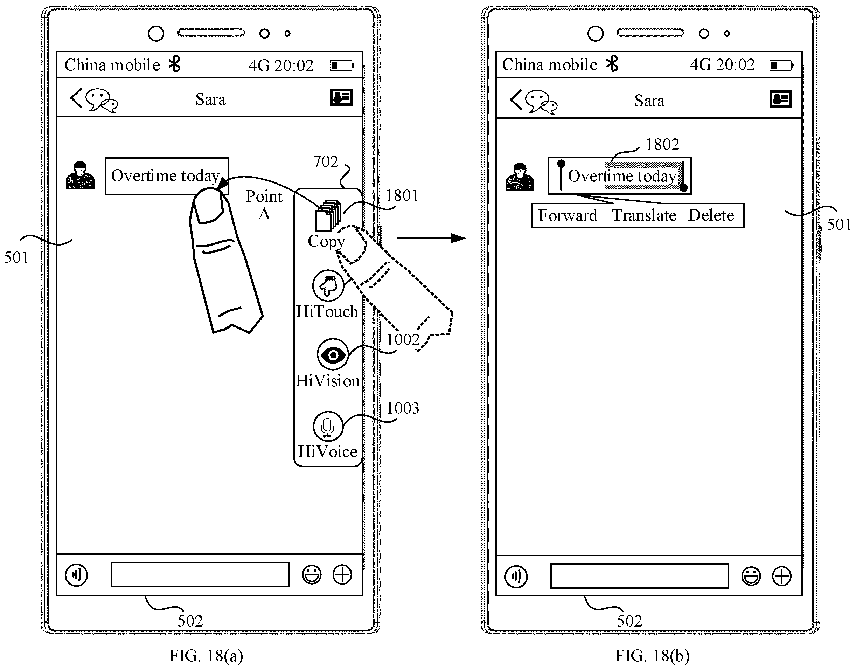

FIG. 18(a) and FIG. 18(b) are a schematic diagram 15 of a scenario of a shortcut key control method according to an embodiment of this application;

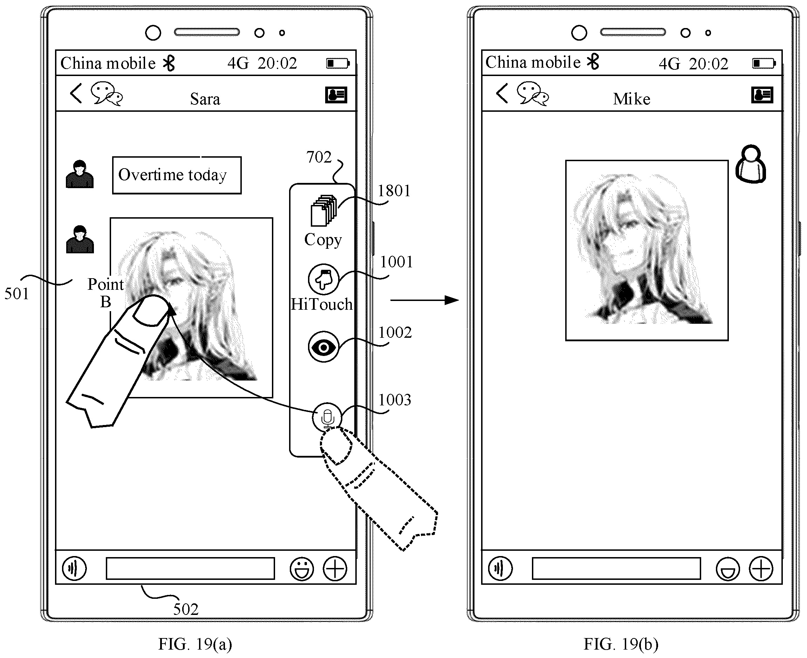

FIG. 19(a) and FIG. 19(b) are a schematic diagram 16 of a scenario of a shortcut key control method according to an embodiment of this application;

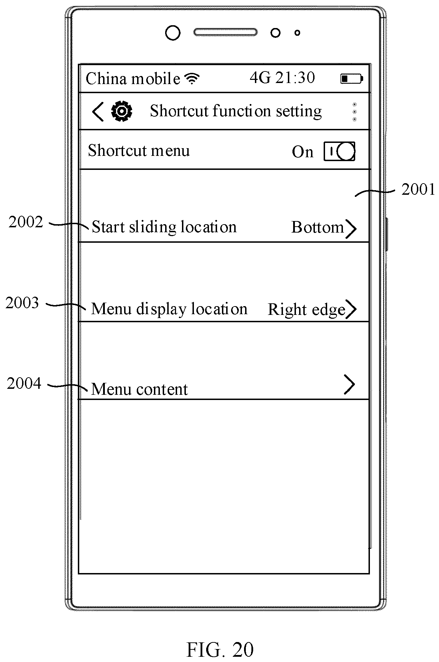

FIG. 20 is a schematic diagram 17 of a scenario of a shortcut key control method according to an embodiment of this application;

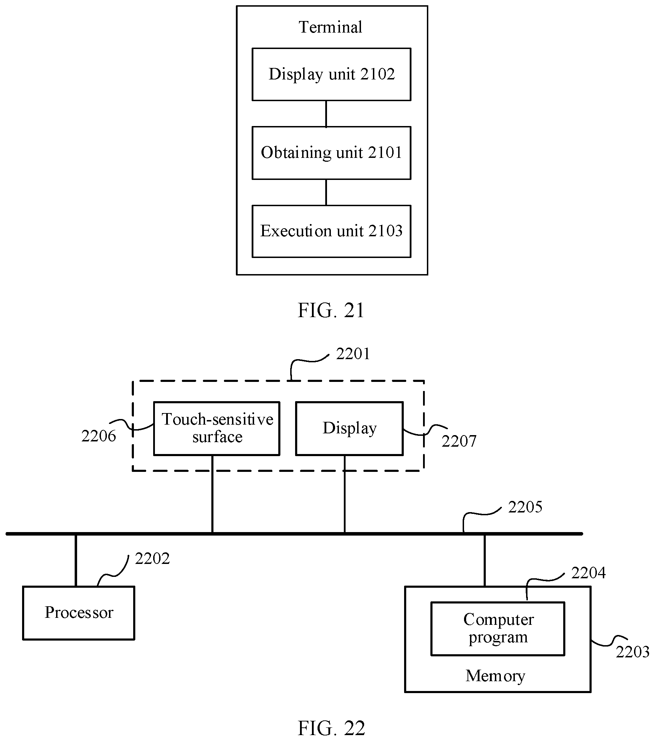

FIG. 21 is a schematic structural diagram 2 of a terminal according to an embodiment of this application; and
FIG. 22 is a schematic structural diagram 3 of a terminal according to an embodiment of this application.

### DESCRIPTION OF EMBODIMENTS

The following describes implementations of the embodiments of this application in detail with reference to the accompanying drawings.

It should be noted that a shortcut key control method provided in the embodiments of this application may be used in a terminal. For example, the terminal may be a device such as a tablet computer, a desktop computer, a laptop computer, a notebook computer, an ultra-mobile personal computer (Ultra-Mobile Personal Computer, UMPC), a handheld computer, a netbook, a personal digital assistant (Personal Digital Assistant, PDA), a wearable electronic device, a smartwatch, a vehicle-mounted device, or a smart car, or may be a mobile phone 100 shown in FIG. 1. A specific form of the terminal is not specially limited in the embodiments of this application.

As shown in FIG. 1, the terminal in the embodiments of this application may be the mobile phone 100. The following specifically describes the embodiments by using the mobile phone 100 as an example. It should be understood that, the mobile phone 100 shown in the figure is only an example of the terminal, and may include more or fewer components than those shown in the figure, or combine two or more components, or have a different component configuration. Various components shown in the figure may be implemented in hardware including one or more signal processing circuits or application-specific integrated circuits, software, or a combination of hardware and software.

As shown in FIG. 1, the mobile phone 100 may specifically include components such as a processor 101, a radio frequency (radio frequency, RF) circuit 102, a memory 103, a touchscreen 104, a Bluetooth module 105, one or more sensors 106, a Wi-Fi module 107, a positioning module 108, an audio circuit 109, a peripheral interface 110, and a power module 111. These components may communicate by using one or more communications buses or signal cables (not shown in FIG. 1). A person skilled in the art can understand that a hardware structure shown in FIG. 1 constitutes no limitation on the mobile phone 100, and the mobile phone 100 may include more or fewer components than those shown in the figure, or combine some components, or have a different component arrangement.

The following specifically describes the components of the mobile phone 100 with reference to FIG. 1.

The processor 101 is a control center of the mobile phone 100. The processor 101 connects various parts of the mobile phone 100 by using various interfaces and lines, and performs various functions of the mobile phone 100 and processes data by running or executing an application stored in the memory 103 and invoking data and an instruction stored in the memory 103. In some embodiments, the processor 101 may include one or more processing units. The processor 101 may further integrate an application processor and a modem processor. The application processor mainly processes an operating system, a user interface, an application, and the like. The modem processor mainly processes wireless communication. It may be understood that the modem processor may alternatively not be integrated into the processor 101.

The radio frequency circuit 102 may be configured to receive and send radio signals in a process of receiving and sending information or calling. Specifically, the radio frequency circuit 102 may receive downlink data from a base station for processing by the processor 101, and send related uplink data to the base station. Usually, the radio frequency circuit includes but is not limited to an antenna, at least one amplifier, a transceiver, a coupler, a low noise amplifier, a duplexer, and the like. In addition, the radio frequency circuit 102 may further communicate with another device through wireless communication. Any communication standard or protocol may be used for the wireless communication, and includes but is not limited to global system for mobile communications, general packet radio service, code division multiple access, wideband code division multiple access, long term evolution, email, short message service, and the like.

The memory 103 is configured to store an application and data. The processor 101 performs various functions of the mobile phone 100 and processes data by running the application and data stored in the memory 103. The memory 103 mainly includes a program storage area and a data storage area. The program storage area may store an operating system, and an application required by at least one function (for example, a sound playing function and an image display function). The data storage area may store data (for example, audio data and a phonebook) created based on usage of the mobile phone 100. In addition, the memory 103 may include a high-speed random access memory, or may include a non-volatile memory, for example, a magnetic disk storage device, a flash memory device, or another volatile solid-state storage device. The memory 103 may store various operating systems, for example, IOS^{®} operating system developed by Apple and ANDROID^{®} operating system developed by Google.

The touchscreen 104 may include a touch-sensitive surface 104-1 and a display 104-2.

The touch-sensitive surface 104-1 (for example, a touch panel) may collect a touch event of a user of the mobile phone 100 on or near the touch-sensitive surface 104-1 (for example, an operation performed by the user with any suitable object such as a finger or a stylus on or near the touch-sensitive surface 104-1), and send collected touch information to another component such as the processor 101. The touch event of the user near the touch-sensitive surface 104-1 may be referred to as a floating touch. The floating touch may mean that the user does not need to directly touch the touch panel to select, move, or drag a target (for example, an icon), but instead, only needs to be near the terminal to perform a desired function. In an application scenario of the floating touch, terms such as "touch" and "contact" do not imply direct contact with the touchscreen, but instead, indicate contact near or close to the touchscreen. The touch-sensitive surface 104-1 on which floating touch can be performed may be implemented by using a capacitive type, infrared sensing, an ultrasonic wave, or the like. The touch-sensitive surface 104-1 may include two parts: a touch detection module and a touch controller. The touch detection module detects a touch location of a user, detects a signal brought by a touch operation, and transmits the signal to the touch controller. The touch controller receives touch information from the touch detection module, converts the touch information into contact coordinates, and sends the contact coordinates to the processor 101, and may further receive and execute an instruction sent by the processor 101. In addition, the touch-sensitive surface 104-1 may be implemented by using a plurality of types such as a resistive type, a capacitive type, an infrared type, and a surface acoustic wave type.

The display (also referred to as a display screen) 104-2 may be configured to display information entered by the user or information provided for the user, and various menus of the mobile phone 100. The display 104-2 may be configured in a form of a liquid crystal display, an organic light-emitting diode, or the like. The touch-sensitive surface 104-1 may cover the display 104-2. After detecting a touch event on or near the touch-sensitive surface 104-1, the touch-sensitive surface 104-1 transmits the touch event to the processor 101 to determine a type of the touch event. Then, the processor 101 may provide a corresponding visual output on the display 104-2 based on the type of the touch event. Although in FIG. 1, the touch-sensitive surface 104-1 and the display 104-2 are used as two independent components to implement input and output functions of the mobile phone 100, in some embodiments, the touch-sensitive surface 104-1 and the display 104-2 may be integrated to implement the input and output functions of the mobile phone 100. It may be understood that the touchscreen 104 is formed by stacking a plurality of layers of materials. In this embodiment of this application, only the touch-sensitive surface (layer) and the display (layer) are displayed, and another layer is not described in this embodiment of this application. In addition, in some other embodiments of this application, the touch-sensitive surface 104-1 may cover the display 104-2, and a size of the touch-sensitive surface 104-1 is greater than that of the display 104-2, so that the display 104-2 is completely covered below the touch-sensitive surface 104-1. Alternatively, the touch-sensitive surface 104-1 may be configured on a front face of the mobile phone 100 in a form of a full panel. To be specific, all touches of the user on the front face of the mobile phone 100 can be sensed by the mobile phone. In this way, full-touch experience on the front face of the mobile phone can be implemented. In some other embodiments, the touch-sensitive surface 104-1 is configured on the front face of the mobile phone 100 in a form of a full panel, and the display 104-2 may also be configured on the front face of the mobile phone 100 in a form of a full panel. In this way, a bezel-less structure can be implemented on the front face of the mobile phone. In some other embodiments of this application, the touchscreen 104 may further include one or more groups of sensor arrays, so that while sensing the touch event of the user on the touchscreen 104, the touchscreen 104 may also sense a pressure and the like exerted by the user on the touchscreen 104.

The Bluetooth module 105 is configured to implement data exchange between the mobile phone 100 and another short-distance terminal (for example, a mobile phone or a smartwatch). The Bluetooth module in this embodiment of this application may be an integrated circuit, a Bluetooth chip, or the like.

The at least one sensor 106 is, for example, a light sensor, a motion sensor, and other sensors. Specifically, the light sensor may include an ambient light sensor and a proximity sensor. The ambient light sensor may adjust luminance of the display of the touchscreen 104 based on brightness of ambient light, and the proximity sensor may turn off the display when the mobile phone 100 moves to an ear. As a type of motion sensor, an accelerometer sensor may detect accelerations in various directions (usually on three axes) and detect a value and a direction of gravity when being stationary, and may be used for an application for identifying a mobile phone posture (such as screen switching between landscape mode and portrait mode, a related game, or magnetometer posture calibration), a function related to vibration recognition (such as a pedometer or a knock), and the like. Other sensors such as a fingerprint recognition device, a gyroscope, a barometer, a hygrometer, a thermometer, and an infrared sensor may be further configured in the mobile phone 100. Details are not described herein.

The Wi-Fi module 107 is configured to provide the mobile phone 100 with network access that complies with a related Wi-Fi standard or protocol. The mobile phone 100 may access a Wi-Fi access point by using the Wi-Fi module 107, to help the user receive and send emails, browse a web page, access streaming media, and the like. The Wi-Fi module 107 provides the user with wireless broadband internet access. In some other embodiments, the Wi-Fi module 107 may also be used as a Wi-Fi wireless access point, and may provide another terminal with Wi-Fi network access.

The positioning module 108 is configured to provide a geographical location for the mobile phone 100. It may be understood that the positioning module 108 may be specifically a receiver of a positioning system such as a global positioning system (global positioning system, GPS) or a BeiDou satellite navigation system. After receiving a geographical location sent by the positioning system, the positioning module 108 sends the information to the processor 101 for processing, or sends the information to the memory 103 for storage. In some other embodiments, the positioning module 108 may be a receiver of an assisted global positioning system (assisted global positioning system, AGPS). The AGPS runs in a manner in which GPS positioning is performed with assistance, and may cooperate with a GPS satellite signal by using a signal of a base station, so that a positioning speed of the mobile phone 100 can be higher. In the AGPS system, the positioning module 108 may obtain positioning assistance by communicating with an assisted positioning server (for example, a positioning server of the mobile phone). The AGPS system serves as an assisted server to assist the positioning module 108 in completing ranging and positioning services. In this case, the assisted positioning server communicates with the positioning module 108 (that is, a GPS receiver) of the terminal such as the mobile phone 100 by using a wireless communications network, to provide positioning assistance.

The audio circuit 109, a loudspeaker 113, and a microphone 114 may provide audio interfaces between the user and the mobile phone 100. The audio circuit 109 may transmit an electrical signal converted from received audio data to the loudspeaker 113, and the loudspeaker 113 converts the electrical signal into a sound signal for output. In addition, the microphone 114 converts a collected sound signal into an electrical signal. The audio circuit 109 receives the electrical signal, converts the electrical signal into audio data, and then outputs the audio data to the RF circuit 102 to send the audio data to, for example, another mobile phone, or outputs the audio data to the memory 103 for further processing.

The peripheral interface 110 is configured to provide various interfaces for an external input/output device (for example, a keyboard, a mouse, an external display, an external memory, or a subscriber identity module card). For example, a universal serial bus port is used to connect a mouse, and a metal contact on a card slot of a subscriber identity module (subscriber identity module, SIM) card provided by a telecommunications operator is used to electrically connect to the subscriber identity module card. The peripheral interface 110 may be configured to couple the external input/output peripheral device to the processor 101 and the memory 103.

The power module 111 (for example, a battery and a power management chip) may supply power to each component. The battery may be logically connected to the processor 101 by using the power management chip, so that functions such as charging management, discharging management, and power consumption management are implemented by using the power module 111.

Although not shown in FIG. 1, the mobile phone 100 may further include a camera, a flash, a mini projection module, a near field communication (near field communication, NFC) module, and the like. Details are not described herein.

In an embodiment of this application, as shown in FIG. 2(a), when a user slides from a first edge of the touchscreen 104 (for example, a bottom edge of the touchscreen 104) to the interior of the touchscreen 104, the touchscreen 104 may continuously collect a series of touch events (for example, touch point coordinates and a touch time) generated by a finger of the user on the touchscreen 104, and report the series of touch events to the processor 101.

The processor 101 may calculate a sliding distance of the finger of the user on the touchscreen 104 based on the touch events. If the processor 101 obtains through calculation that the sliding distance of the finger of the user on the touchscreen 104 is greater than a preset value, it indicates that the user currently intends to invoke a shortcut menu. In this case, as shown in FIG. 2(b), the processor 101 may control the touchscreen 104 to display a shortcut menu 201 in a currently displayed interface in a superimposed manner. The shortcut menu 201 may include shortcut keys 202 of one or more applications (or application functions). In addition, the shortcut keys 202 may be disposed along a second edge (the second edge is different from the first edge) of the touchscreen 104, or the shortcut keys 202 may be disposed near a location at which the finger of the user stays on the touchscreen 104.

In this way, the finger of the user does not need to leave the screen, and may continue to slide to the shortcut menu 201 to search for a shortcut key 202 required by the user. When the touchscreen 104 detects that the finger of the user leaves a shortcut key 202, or detects that the finger of the user drags a shortcut key 202, it indicates that the user selects the shortcut key 202, and the processor 101 may perform a shortcut function corresponding to the shortcut key 202, for example, open an application, enable a specific function, or perform a specific operation on content in a currently displayed interface.

For example, as shown in FIG. 2(a), the user slides from a bottom-right edge of the touchscreen 104 to the top of the touchscreen 104. When it is detected that a sliding distance is greater than a preset value, as shown in FIG. 2(b), the processor 101 may control the touchscreen 104 to display a shortcut menu 201 on the right edge of the touchscreen 104. Shortcut keys 202 in the shortcut menu 201 specifically include an icon of WeChat, an icon of a Wi-Fi function, and an icon of a copy function. It can be seen that, the shortcut menu 201 is located on an extended line of a sliding track of the finger of the user on the touchscreen 104. In this case, the user can reach a corresponding shortcut key 202 by continuing to slide the finger without changing a sliding direction, so that the finger of the user can enable a corresponding shortcut function in one step without leaving the touchscreen 104.

For example, if it is detected that the finger of the user leaves the touchscreen 104 after reaching the icon of WeChat, the processor 101 may open WeChat and control the touchscreen 104 to display a related interface of WeChat. Alternatively, if it is detected that the finger of the user leaves the touchscreen 104 after reaching the icon of the Wi-Fi function, the processor 101 may control the Wi-Fi apparatus 107 to enable the Wi-Fi function in the background. In this case, the touchscreen 104 still displays a currently displayed interface. Alternatively, if it is detected that the finger of the user drags the icon of the copy function to a location in the currently displayed interface after reaching the icon of the copy function, the processor 101 may copy content such as a text or a picture at the location for the user.

For example, the memory 103 of the mobile phone 100 may store an ANDROID^{®} operating system. This operating system is a Linux-based operating system for mobile devices, and implements various functions in combination with the foregoing hardware in the mobile phone 100. The following describes a software architecture of the stored ANDROID^{®} operating system in detail. It should be noted that, in this embodiment of this application, only the ANDROID^{®} operating system is used as an example to describe a software environment required by the terminal to implement technical solutions in the embodiments. A person skilled in the art may understand that the embodiments of this application may be alternatively implemented by using another operating system, for example, an iOS operating system.

For example, FIG. 3 is a schematic diagram of a software architecture of an ANDROID^{®} operating system that can run in the foregoing terminal. The software architecture may be divided into four layers: an application layer, an application framework layer, a function library layer, and a Linux kernel layer.

### 1. Application layer (Applications)

The application layer is an uppermost layer of the operating system, may include system-level applications (for example, home screen, messaging, phone, calendar, and contacts) of the operating system, and may also include general-level applications (for example, WeChat and Taobao). The system-level application usually means that the application has system-level permission and can obtain various system resources. The general-level application usually means that the application has general permission, and may not be capable of obtaining some system resources or needs to be authorized by a user before obtaining some system resources. The system-level application may be an application preinstalled on a mobile phone. The general-level application may be an application preinstalled on a mobile phone, or may be an application that is subsequently installed by the user autonomously.

Usually, an application is developed by using a Java language, and is implemented by invoking an application programming interface (application programming interface, API) provided by the application framework layer.

### 2. Application Framework layer (Application Framework)

The application framework layer mainly provides, for a developer, various APIs that can be used to access applications. The developer may interact with a bottom layer (for example, a function library layer or a Linux kernel layer) of the operating system through an application framework to develop an application of the developer. The application framework mainly includes a series of services and management systems of the Android operating system. The application framework mainly includes the following basic services:
an activity manager (Activity Manager): configured to manage a lifecycle of each application and provide a common navigation rollback function;
a content provider (Content Providers): configured to manage data sharing and access between different applications;
a notification manager (Notification Manager): configured to control an application to display prompt information (for example, an alert (Alerts) or a notification (Notifications)) on a status bar, a lock screen interface, or the like to a user;
a resource manager (Resource Manager): providing a non-code resource (for example, a character string, a graphic, or a layout file (Layout file)) for an application to use;
a clipboard manager (Clipboard Manager): mainly providing a function of copying or pasting in an application or between applications;
a view (View): having abundant and extensible view sets, which may be used to construct an application, and specifically has a plurality of types such as a list (list), a grid (grid), a text (text), a button (button), and an image (image), where an image view has a main function of displaying an image, and is usually presented in a GUI in a form of a non-editable control, and a text view has a main function of displaying a character string, and is usually presented in a GUI in a form of an editable control; and
a location manager (Location Manager): mainly configured to enable an application to access a geographical location of a terminal.

### 3. Function library layer (Libraries)

The function library layer is a support of the application framework and is an important link connecting the application framework layer and the Linux kernel layer. The function library layer includes some function libraries compiled by using a computer programming language C or C++. These function libraries may be used by different components in the operating system, and provide a service for a developer through the application framework layer. Specifically, the function libraries may include a libc function library, which is specifically customized for a device based on embedded Linux. The function libraries may further include a multimedia library (Media Framework), which supports audio or video playback and recording in a plurality of encoding formats, and also supports a static image file and a common audio or video encoding format. The function libraries further include a surface management library (Surface Manager), which is mainly responsible for managing access to a display system, is specifically responsible for managing interaction between display and access operations when a plurality of applications are executed, and is also responsible for display synthesis of 2D drawing and 3D drawing.

The function library layer may further include other function libraries used to implement various functions of the mobile phone, for example, an SGL (Scalable Graphics Library) that is a 2D graph and image processing engine based on an XML (Extensible Markup Language) file; an SSL (Secure Sockets Layer) that is located between a TVP/IP protocol and various application-layer protocols to support data communication; OpenGL/ES that supports a 3D effect; SQLite that is a relational database engine; Webkit that is a web browser engine; and FreeType that supports a bitmap and a vector font.

Android Runtime is a running environment in the ANDROID^{®} operating system, and is a new virtual machine used in the ANDROID^{®} operating system. In Android Runtime, an AOT (Ahead-Of-Time) technology is used. When an application is installed for the first time, a bytecode of the application is compiled into a machine code in advance, so that the application becomes a real local application. When the application is subsequently run again, a compilation step is omitted, so that both startup and execution become faster.

In some other embodiments of this application, Android Runtime may alternatively be replaced with a core function library (Core Libraries) and a Dalvik virtual machine (Dalvik Virtual Machine). The core function library provides most functions of an API in the Java language, mainly provides, for the application framework layer in a Java native interface (Java native interface, JNI), an interface for invoking a bottom-layer program library, and further includes some core APIs of the operating system, for example, android.os, android.net, and android. media. The Dalvik virtual machine uses a JIT (Just-in-Time) runtime compilation mechanism. Each time a process is started, the virtual machine needs to recompile a bytecode in the background. This affects a startup speed to some extent. Each application runs in one Dalvik virtual machine instance, and each Dalvik virtual machine instance is independent process space. The Dalvik virtual machine is designed, so that a plurality of virtual machines can efficiently run on one device. An executable file format of the Dalvik virtual machine is .dex. The dex format is a compression format specially designed for Dalvik, and is suitable for a system with limited memory and a limited processor speed. It should be noted that the Dalvik virtual machine depends on the Linux kernel in providing a basic function (thread and bottom-layer memory management). It may be understood that Android Runtime and Dalvik are different types of virtual machines, and a person skilled in the art may select different forms of virtual machines in different cases.

### 4. Linux kernel layer (Linux Kernel)

This layer provides a core system service of the operating system. For example, security, memory management, process management, a network protocol stack, a driver model, and the like are all based on the Linux kernel. The Linux kernel also serves as an abstraction layer between a hardware stack and a software stack. This layer has many drivers related to a mobile device. Main drivers include a display driver, a Linux-based frame buffer driver, a keyboard driver used as an input device, a flash driver based on a memory technology device, a camera driver, a Bluetooth driver, a Wi-Fi driver, a USB driver, and the like.

In the embodiments of this application, the shortcut menu 201 may also be used as a system-level application (for example, a shortcut menu APP) that runs in the background of the mobile phone 100. After receiving a sliding operation entered by a user to a first edge of the touchscreen 104, the touchscreen 104 at a hardware layer may report a series of touch events in the sliding operation layer by layer to the shortcut menu APP at the application layer. Further, the shortcut menu APP may invoke a related interface and service at the application framework layer, to determine a sliding distance of a finger of the user on the touchscreen 104. If the sliding distance of the finger of the user on the touchscreen 104 is greater than a preset value, the shortcut menu APP may further invoke a related interface and service at the application framework layer, and the shortcut menu 201 is displayed on a second edge in a currently displayed interface. In other words, the shortcut menu 201 is displayed in the currently displayed interface in a superimposed manner.

After the shortcut menu 201 is displayed, the touchscreen 104 still collects a touch event performed by the finger of the user on the touchscreen 104, and reports the collected touch event to the shortcut menu APP. When the shortcut menu APP determines that the finger of the user leaves a shortcut key 202 in the shortcut menu 201, or the finger of the user drags a shortcut key 202, the shortcut menu APP may invoke a related interface and service at the application framework layer to open an application corresponding to the shortcut key 202 or enable an application function corresponding to the shortcut key 202. In the embodiments of this application, the application or the application function corresponding to the shortcut key 202 may be referred to as a shortcut function.

It can be learned that, in the embodiments of this application, the user needs to perform the sliding operation only once on the edge of the touchscreen, to implement a series of operations including invoking the shortcut menu 201, selecting the shortcut key 202 in the shortcut menu 201, and enabling the shortcut function corresponding to the shortcut key 202. In this way, the user can implement a shortcut function by performing the sliding operation once in any currently displayed interface. In other words, the user can achieve experience of directly enabling a shortcut function in one step in any scenario, thereby simplifying a process of opening an application or enabling an application function by the user by using a shortcut key.

It should be noted that the sliding operation in the embodiments of this application is an operation that the finger of the user does not leave the touchscreen and generates displacement on the touchscreen in a process in which the finger of the user is in contact with the touchscreen. For example, a process in which the finger of the user touches a point A of the touchscreen and then continuously moves to a point B of the touchscreen may be considered as a sliding operation. For another example, a process in which the finger of the user touches a point A of the touchscreen, then continuously moves to a point B of the touchscreen, stays at the point B for a period of time, and subsequently leaves the touchscreen may also be considered as a sliding operation. Certainly, during the sliding operation that the finger of the user moves from the point A of the touchscreen to the point B of the touchscreen, an action such as pause, press, or touch and hold without lifting the finger away from the touchscreen may be further performed. This is not limited in the embodiments of this application.

For ease of understanding, the following specifically describes, with reference to accompanying drawings, a shortcut key control method provided in an embodiment of this application. In the following embodiments, an example in which a terminal is a mobile phone is used for description.

FIG. 4 is a schematic flowchart of a shortcut key control method according to an embodiment of this application. As shown in FIG. 4, the shortcut key control method may include the following steps.

S401. A mobile phone displays a first interface on a touchscreen.

The first interface may be an interface displayed when any APP in the mobile phone runs. For example, as shown in FIG. 5, a first interface 501 may be text content that is being displayed when the mobile phone runs the app WeChat. Alternatively, the first interface may be a home screen, a lock screen interface, a leftmost-screen menu, a pull-up menu, a drop-down menu, or the like. This is not limited in this embodiment of this application.

S402. The mobile phone receives a first phase of a sliding operation entered by a user in the first interface, where a start location of a finger of the user in the first phase is any point on a first edge in the first interface, and an end location of the finger of the user in the first phase is a point away from the first edge in the first interface.

In this embodiment of this application, when the user expects to invoke a shortcut menu in the mobile phone to implement a shortcut function provided in the shortcut menu, the user does not need to switch a currently displayed interface (that is, the first interface). Correspondingly, the user may enter, from any point on the first edge in the first interface, a sliding operation on the touchscreen.

The concept "edge" in this embodiment of this application may be each boundary line of the touchscreen. Usually, a rectangular touchscreen includes four boundary lines: a top boundary line, a bottom boundary line, and boundary lines on two sides. Alternatively, still as shown in FIG. 5, the "edge" may be a strip area disposed along one or more boundary lines of the touchscreen.

In this embodiment of this application, the mobile phone may separately perform different response operations for different phases of the sliding operation, so that the user can enable a shortcut function by performing the sliding operation only once. For example, the first edge is a bottom 502 of the touchscreen. Still as shown in FIG. 5, the user may slide from a point at the bottom 502 of the touchscreen toward the interior of the touchscreen. In this case, the touchscreen may send a series of collected touch events including touch point coordinates to a processor, and the processor calculates a sliding direction and a sliding distance of the finger of the user. If the sliding direction is a direction away from the bottom 502 of the touchscreen (that is, sliding toward the interior of the touchscreen), and the sliding distance is greater than a preset value, it indicates that the user currently slides to invoke a shortcut menu. In this case, such process in which the finger of the user slides from the bottom 502 of the touchscreen until the finger of the user slides toward the interior of the touchscreen by the preset value may be referred to as the first phase of the sliding operation. When the first phase ends, the finger of the user does not need to leave the touchscreen, but the mobile phone may perform the following step S403 in response to the sliding operation in the first phase.

It should be noted that, the mobile phone may start, after the finger of the user touches an edge of the touchscreen, to detect whether the user performs the first phase of the sliding operation, or may start, after the finger of the user touches an area outside the touchscreen (for example, a housing of a front panel of the mobile phone), to detect whether the user performs the first phase of the sliding operation. To be specific, the user may perform the first phase of the sliding operation from the edge of the touchscreen or from the periphery of the touchscreen. This is not limited in this embodiment of this application.

The sliding distance may be absolute displacement generated when the finger of the user slides on the touchscreen, or may be a displacement component in a horizontal direction or a vertical direction when the finger of the user slides on the touchscreen. This is not limited in this embodiment of this application.

In addition, in some embodiments of this application, a trigger gesture corresponding to another operation function may have been originally set for the first edge in the mobile phone. For example, if a function that the user can invoke a pull-up menu by sliding upward from the bottom 502 of the touchscreen is originally set in the mobile phone, after the mobile phone receives an operation that the user slides upward from the bottom 502 of the touchscreen, the mobile phone cannot determine whether the user slides to invoke the pull-up menu or the shortcut menu. Therefore, the first edge of the mobile phone may be divided into a plurality of portions, and different menus or a same menu may be invoked by sliding in different portions. As shown in FIG. 6, the bottom 502 of the touchscreen may be divided into a plurality of portions in advance in the mobile phone. For example, the bottom 502 of the touchscreen is divided into a first portion 601, a second portion 602, and a third portion 603. Further, it is set that the first portion 601 in the center of the bottom 502 of the touchscreen corresponds to a sliding operation for invoking a pull-up menu, the second portion 602 on one side of the bottom 502 of the touchscreen corresponds to a sliding operation for invoking a first shortcut menu, and the second portion 603 on the other side of the bottom 502 of the touchscreen corresponds to a sliding operation for invoking a second shortcut menu. For another example, the bottom 502 of the touchscreen may be alternatively divided into two portions. One portion is a portion 601 in the center of the bottom 502 of the touchscreen, and the other portion includes a portion 602 and a portion 603 that are on two sides of the bottom 502 of the touchscreen. The portion 601 corresponds to a sliding operation for invoking a pull-up menu, and both the portion 602 and the portion 603 correspond to a sliding operation for invoking a same shortcut menu.

In this way, when it is detected that the user enters the sliding operation in the first phase on the touchscreen from the second portion 602 or the third portion 603, the mobile phone may perform the following step S403 in response to the sliding operation in the first phase.

Optionally, still as shown in FIG. 6, the mobile phone may further display an icon 604 in the first interface 502, where the icon 604 is used to remind the user to invoke a shortcut menu. The icon 604 may be displayed in the second portion 602 and the third portion 603, to remind the user of a start sliding location for performing a sliding operation to invoke a shortcut menu. Alternatively, the mobile phone may further display an icon 605 in the first interface 502, where the icon 605 is used to remind the user to invoke a pull-up menu. The icon 605 may be displayed in the first portion 601, to remind the user of a start sliding location for performing a sliding operation to invoke a pull-up menu.

S403. In response to the first phase of the sliding operation, the mobile phone displays the shortcut menu in the first interface, where the shortcut menu includes a shortcut key of at least one application or application function.

In response to the first phase of the sliding operation, the mobile phone may display the shortcut menu along any edge other than the first edge in the first interface. The shortcut menu includes the shortcut key of the at least one application or application function. As shown in FIG. 7, in response to the sliding operation in the first phase that is performed by the user from the bottom edge 502 of the first interface 501, the mobile phone may display a shortcut menu 702 along a right edge 701 of the first interface 501. The shortcut menu 702 includes a shortcut key 703 of at least one application or application function.

Because the shortcut menu 702 is not displayed at a start location (that is, the first edge) from which the user performs the first phase of the sliding operation, the finger of the user does not need to leave the touchscreen to return to the first edge to search for the shortcut key 703 in the shortcut menu 702. Therefore, after the mobile phone displays the shortcut menu 702, the user may continue to slide the finger to the shortcut menu 702 in the first interface 501, to select the corresponding shortcut key 703. In this way, the user needs to perform the sliding operation only once in an entire process from invoking the shortcut menu 702 to selecting, by the user, the corresponding shortcut key 703.

In some embodiments of this application, the second edge may be an edge closest to the start location of the finger of the user in the first phase, or the second edge may be an edge closest to the end location of the finger of the user in the first phase. In other words, the shortcut menu 702 may be displayed at a location relatively close to the finger of the user. In this way, after the shortcut menu 702 is displayed, the user can reach the shortcut menu 702 to select the corresponding shortcut key 703 by sliding for a relatively short distance.

For example, as shown in FIG. 8, if the user slides upward from the right side (or the left side) of the bottom 502 of the touchscreen, that is, performs the first phase of the sliding operation, the mobile phone may correspondingly display the shortcut menu 702 along the right edge 701 (or a left edge) of the touchscreen. In this case, the shortcut menu 702 is on an extended line of a sliding track of the sliding operation in the first phase, and the user does not need to change the sliding track but can reach the shortcut menu 702 by continuing to slide for a relatively short distance.

It should be noted that when the mobile phone displays the shortcut menu along the second edge, a boundary line of the shortcut menu may overlap the second edge, or may be spaced from the second edge by a particular gap. This is not limited in this embodiment of this application.

In some other embodiments of this application, the mobile phone may further display the shortcut menu 702 near a location at which the finger of the user is located when the first phase of the sliding operation ends. For example, as shown in FIG. 9, if the user performs the first phase of the sliding operation from the bottom 502 of the touchscreen, in response to the first phase of the sliding operation, the mobile phone may display the shortcut menu 702 in an area near a location at which the finger of the user is located when the first phase ends. In this case, shortcut keys 703 in the shortcut menu 702 may be arranged in a sector shape, a rectangular shape, or a circular shape. This is not limited in this embodiment of this application.

Further, the shortcut key 703 in the shortcut menu 702 may be an icon of an application (for example, an icon of a reading application), or may be an icon of an application function (for example, an icon of a Moments function of WeChat).

For example, as shown in FIG. 10, the shortcut menu 702 displayed by the mobile phone in the first interface 501 includes four shortcut keys. The four shortcut keys are an icon 1001 of a "HiTouch" function, an icon 1002 of a "HiVision" function, an icon 1003 of a "HiVoice" function, and an add key 1004. The "HiTouch" function means that the mobile phone may identify text content in a currently displayed interface and display an identified keyword and a link related to the keyword, such as a navigation link, a shopping link, or a news link, to the user. The "HiVision" function means that the mobile phone may enable a camera to identify information such as various different objects, characters, animals, plants, and brands captured by the camera, and may further read information such as a bar code and a text. The "HiVoice" function is a component of an intelligent voice assistant, and can help, by identifying voice entered by the user, the user perform an operation such as controlling a device, making a call, or sending an SMS message.

Certainly, the shortcut key may alternatively be an icon of a Wi-Fi function, an icon of a Bluetooth function, an icon of a copy function, an icon of a timing function, an icon of a camera function, an icon of a calculator function, an icon of a recently used application, or the like. This is not limited in this embodiment of this application. In addition, the user may further add a user-defined shortcut key of an application or application function to the shortcut menu 702 by using the add key 1004.

Alternatively, in some other embodiments of this application, a shortcut key related to the currently displayed interface may be further disposed in the shortcut menu 702 in the mobile phone. For example, as shown in FIG. 11, the first interface 501 displayed by the mobile phone is an interface of the app WeChat. In this case, the mobile phone may display, as shortcut keys in the shortcut menu 702, icons of some application functions provided by the app WeChat. For example, the shortcut menu 702 in FIG. 11 includes an icon 1101 for opening an unread message, an icon 1102 for opening Moments, an icon 1103 for opening "Me", and an icon 1104 of a sharing function. Certainly, if the first interface displayed by the mobile phone is an interface of another application, the mobile phone may correspondingly display, as shortcut keys in the shortcut menu, icons of some application functions (for example, functions such as payment collection, payment, and a QR code) provided by the application, to help the user quickly enable another application function of the current application when using different applications.

Alternatively, in some other embodiments of this application, for sliding operations performed by the user on different edges or at different locations on a same edge, the mobile phone may invoke different shortcut menus to provide more shortcut function options for the user. For example, as shown in FIG. 12(a), if the user slides upward from the left side of the bottom 502 of the touchscreen to perform the first phase of the sliding operation, the mobile phone may correspondingly display a first shortcut menu 1201 along the left edge of the touchscreen. The first shortcut menu 1201 may include an icon of at least one application recently used by the user. For another example, as shown in FIG. 12(b), if the user slides upward from the right side of the bottom 502 of the touchscreen to perform the first phase of the sliding operation, the mobile phone may correspondingly display a second shortcut menu 1202 along the right edge of the touchscreen. The second shortcut menu 1202 may include shortcut keys of preset application functions, for example, the icon 1001 of the "HiTouch" function, the icon 1002 of the "HiVision" function, and the icon 1003 of the "HiVoice" function.

Certainly, for sliding operations performed by the user on different edges or at different locations on a same edge, the mobile phone may alternatively invoke a same shortcut menu. In this way, in a one-hand operation scenario, regardless of whether the user performs the first phase of the sliding operation by using the left hand or the right hand, a same shortcut menu within an operation range of the finger of the user can be invoked in the first interface.

In addition, after the mobile phone displays the shortcut menu in the first interface, if the user does not need the shortcut menu, the user may lift the finger at any location other than a location of the shortcut menu. In this case, the mobile phone may hide the shortcut menu. FIG. 11 is used as an example. After the user enters the first phase of the sliding operation in the first interface 501, the mobile phone displays the shortcut menu 702 in the first interface 501. In this case, the finger of the user still stays in the first interface 501. If the user currently does not expect to continue to display the shortcut menu 702, the user may leave the touchscreen before the finger enters the shortcut menu 702, or the user may slide the finger to any location other than the shortcut menu 702 and then leave the touchscreen, or the user may slide the finger out of the shortcut menu 702 after the finger enters the shortcut menu 702 and leave the touchscreen. In this case, the mobile phone may hide the shortcut menu 702 in response to the operation that the finger of the user leaves the touchscreen. Certainly, the user may alternatively trigger, by performing a specific gesture, for example, a pressing operation, the mobile phone to hide the shortcut menu. This is not limited in this embodiment of this application.

S404. The mobile phone receives a second phase of the sliding operation entered by the user in the first interface, where a start location of the finger of the user in the second phase is the end location of the finger of the user in the first phase, and an end location of the finger of the user in the second phase is a first shortcut key in the shortcut menu.

After the mobile phone displays the shortcut menu in the first interface, the user may continue to enter the second phase of the sliding operation in the first interface. To be specific, the first phase and the second phase are two consecutive processes of the sliding operation performed by the finger of the user from the first edge. In other words, the start location of the finger of the user in the second phase is the same as the end location of the finger of the user in the first phase, and the end location of the finger of the user in the second phase is a shortcut key (that is, the first shortcut key) that the user expects to select.

In a possible design manner, the second phase of the sliding operation is specifically a process in which the finger of the user slides from the end location of the finger of the user in the first phase to the first shortcut key and then leaves the touchscreen. As shown in FIG. 13, after the mobile phone displays the shortcut menu 702 in the first interface 501, the user may continue to slide toward the first shortcut key that the user expects to select in the shortcut menu 702. For example, an icon 1301 of a reading application is the first shortcut key. When the mobile phone detects that the finger of the user moves to the icon 1301 of the reading application and then leaves the touchscreen, it indicates that the first shortcut key currently selected by the user is the icon 1301 of the reading application, and the second phase of the sliding operation ends. Then, the mobile phone may continue to perform the following step S405. Certainly, if the first shortcut key that the user expects to select is not the icon 1301, the user may not leave the touchscreen after reaching the icon 1301, but continue to slide toward another shortcut key that the user expects to select, until the user reaches the shortcut key that the user expects to select. Then, the user leaves the touchscreen.

In another possible design manner, in addition to the process in which the finger of the user slides from the end location of the finger of the user in the first phase to the first shortcut key, the second phase of the sliding operation further includes a process in which the finger of the user stays on the first shortcut key or presses the first shortcut key. Still as shown in FIG. 13, after the mobile phone displays the shortcut menu 702 in the first interface 501, the user may continue to slide toward the first shortcut key that the user expects to select in the shortcut menu 702. For example, an icon 1301 of a reading application is the first shortcut key. When the mobile phone detects that the finger of the user moves to the icon 1301 of the reading application and then stays on the icon 1301 for preset duration or presses the icon 1301, it indicates that the first shortcut key currently selected by the user is the icon 1301 of the reading application, and the second phase of the sliding operation ends. In this case, the mobile phone may mark, in a manner such as vibrating, enlarging the icon 1301, or highlighting the icon 1301, that the icon 1301 has been selected. Subsequently, if it is detected that the finger of the user leaves the selected icon 1301, or it is detected that the finger of the user drags the icon 1301 to continue to slide, the mobile phone may continue to perform the following step S405 or S406 and S407.

In another possible design manner, as shown in FIG. 14, after the mobile phone displays the shortcut menu 702 in the first interface 501, a mapping relationship between various shortcut keys in the shortcut menu 702 and different areas in the first interface 501 may be established. For example, in the first interface 501 shown in FIG. 14, a shortcut key 1401 is mapped to a mapping area 1402, a shortcut key 1403 is mapped to a mapping area 1404, and a shortcut key 1405 is mapped to a mapping area 1406. In this case, in a process in which the user performs the second phase of the sliding operation, if it is detected that the finger of the user reaches the mapping area 1405 of the shortcut key 1403, or it is detected that duration for which the finger of the user stays in the mapping area 1405 is greater than a preset value, or it is detected that the finger of the user touches and holds or heavily presses the mapping area 1405, the mobile phone may remind, in a manner such as vibrating, enlarging the icon, or highlighting, the user that the shortcut key 1403 has been selected. In this case, if it is detected that the finger of the user leaves the touchscreen, it indicates that the user selects the shortcut key 1403, that is, the second phase of the sliding operation ends. Certainly, if the first shortcut key that the user expects to select is not the shortcut key 1403, the user may continue to slide the finger toward a mapping area of another shortcut key.

When the second phase of the sliding operation ends, the user has selected the first shortcut key in the shortcut menu. In this case, if it is detected that the finger of the user leaves the touchscreen, the mobile phone may continue to perform the following step S405, or if it is detected that the finger of the user does not leave the touchscreen, the mobile phone may continue to perform the following steps S406 and S407.

In addition, if the user expects to deselect a shortcut key after selecting the shortcut key, the user may drag the selected shortcut key back to the shortcut menu. For example, the selected shortcut key is dragged back to an original location of the shortcut key in the shortcut menu. In this case, the mobile phone may deselect the selected shortcut key. Certainly, the user may alternatively trigger, by performing a specific gesture, for example, a pressing operation, the mobile phone to deselect the selected shortcut key. This is not limited in this embodiment of this application.

S405. In response to the second phase of the sliding operation, the mobile phone enables a shortcut function corresponding to the first shortcut key.

If the finger leaves the touchscreen when the user finishes the second phase of the sliding operation, the mobile phone may perform, in response to the second phase of the sliding operation, the shortcut function corresponding to the first shortcut key selected by the user. If the first shortcut key is an icon of an application, the mobile phone may open the application and display a second interface of the application. If the first shortcut key is an icon of an application function, the mobile phone may open the application, and run and display a second interface corresponding to the application function. In this way, the user can directly enable a shortcut function by performing the sliding operation once in the first interface, thereby simplifying an entire operation process of triggering the shortcut function by the user by using a shortcut key, so that the user achieves experience of directly enabling the shortcut function in one step.

For example, the icon 1301 of the reading application is the first shortcut key. As shown in FIG. 15(a), when the user performs the second phase of the sliding operation, the mobile phone detects that the finger of the user slides to the icon 1301 of the reading application and then leaves the touchscreen. In this case, the mobile phone may query whether the reading application runs in the background. If the reading application runs in the background, the mobile phone may switch the reading application to running in the foreground, and display a second interface in which the reading application enters the background, for example, a last reading location of an article or a novel shown in FIG. 15(b). Correspondingly, if the reading application does not run in the background, the mobile phone may open the reading application and display a home page of the reading application.

After S405, if the finger of the user does not leave the touchscreen, the following steps may be further performed.

S406. The mobile phone receives a third phase of the sliding operation entered by the user in the first interface, where a start location of the finger of the user in the third phase is the end location of the finger of the user in the second phase, and an end location of the finger of the user in the third phase is a location at which the finger of the user leaves the touchscreen.

The third phase of the sliding operation is a process in which the finger of the user drags the selected first shortcut key to slide. If it is detected, when the second phase ends, that the finger of the user does not leave the touchscreen, because the user currently has selected the first shortcut key in the shortcut menu, the user can drag the first shortcut key to continue to perform the third phase of the sliding operation. To be specific, the third phase and the second phase are also two consecutive processes of the sliding operation performed by the user. In other words, the start location of the finger of the user in the third phase is the same as the end location of the finger of the user in the second phase, and the end location of the finger of the user in the third phase may be any point in the first interface. When the finger of the user drags the first shortcut key and leaves the touchscreen, the third phase of the sliding operation ends, and the location at which the finger of the user leaves the touchscreen is the end location.

S407. In response to the third phase of the sliding operation, the mobile phone performs the shortcut function corresponding to the first shortcut key in the first interface.

In some embodiments of this application, if the first shortcut key is an icon of an application (or an application function) that is not associated with the current first interface, the mobile phone may open the application or enable the application function in response to the third phase of the sliding operation. For example, as shown in FIG. 16A and FIG. 16B, when the user performs the third phase of the sliding operation, the mobile phone detects that the finger of the user slides to the icon 1301 of the reading application and then continues to drag the icon 1301 of the reading application. Because the reading application is not directly associated with the currently displayed first interface 501 of the app WeChat, in a process in which the user drags the icon 1301 of the reading application, the mobile phone may open the reading application, and gradually switch the currently displayed first interface 501 to a second interface 1601 of the reading application in a dragging process of the finger of the user, to implement smooth transition from the first interface 501 to the second interface 1601.

Alternatively, if the first shortcut key is an icon of an application, the mobile phone may further detect a sliding direction along which the user drags the first shortcut key in the third phase, to enable different application functions of the application based on the sliding direction along which the first shortcut key is dragged. For example, as shown in FIG. 17, if the mobile phone detects that the user drags the icon 1301 of the reading application to slide toward a top edge of the touchscreen, the mobile phone may open a recent reading list in the reading application. If the mobile phone detects that the user drags the icon 1301 of the reading application to slide toward a bottom edge of the touchscreen, the mobile phone may enable a search function of the reading application. If the mobile phone detects that the user drags the icon 1301 of the reading application to slide toward the right edge of the touchscreen, the mobile phone may open a home page of the reading application. A correspondence between different sliding directions and application functions may be manually set by the user, or may be automatically set in the mobile phone. This is not limited in this embodiment of this application.

In some other embodiments of this application, if the first shortcut key is an icon of an application (or an application function) associated with the current first interface, the mobile phone may perform, in response to the third phase of the sliding operation, the shortcut function of the first shortcut key on content displayed in the current first interface.

For example, as shown in FIG. 18(a), the shortcut menu 702 displayed by the mobile phone in the first interface 502 includes the icon 1001 of the "HiTouch" function, the icon 1002 of the "HiVision" function, the icon 1003 of the "HiVoice" function, and an icon 1801 of a copy function. After the user selects the icon 1801 of the copy function in the second phase of the sliding operation, the mobile phone detects that the user drags the icon 1801 of the copy function to a point A in the first interface 502 and then releases the icon 1801 (an end location is the point A) when the user performs the third phase of the sliding operation. Because text content displayed in the first interface 502 supports the copy function, the mobile phone may enable the copy function and copy a paragraph 1802 corresponding to the point A in the first interface 502. In this case, as shown in FIG. 18(b), the mobile phone may highlight the paragraph 1802 in the first interface 502, and remind the user that the paragraph 1802 is copied successfully. Certainly, the mobile phone may alternatively copy, on a per-phrase or per-sentence basis, text content corresponding to the point A in the first interface 502.

For another example, as shown in FIG. 19(a) and FIG. 19(b), the user selects the icon 1003 of the "HiVoice" function in the second phase of the sliding operation, if the mobile phone detects that the user continues to drag the icon 1003 (that is, performs the third phase of the sliding operation), the mobile phone may enable the "HiVoice" function in the background to detect, in real time, a voice instruction entered by the user. As shown in FIG. 19(a), if it is detected that the user drags the icon 1003 to a point B in the first interface 502, and it is detected that the voice instruction entered by the user is "send to Mike through WeChat", the mobile phone may send a picture 1901 corresponding to the point B in the first interface 502 to the contact Mike in WeChat. In this case, the mobile phone may stay in the first interface 502, or may jump to a chat interface with Mike in WeChat, as shown in FIG. 19(b). This is not limited in this embodiment of this application.

It can be learned that, if the content displayed in the first interface supports the shortcut function of the shortcut key selected by the user in the second phase, the user may continue to perform the third phase of the sliding operation, so that the mobile phone may perform the shortcut function of the first shortcut key on the content displayed in the current first interface. In this way, the user can implement, by performing the sliding operation once, a series of operations such as invoking a shortcut menu, selecting a shortcut function, enabling the shortcut function, and using the shortcut function. This greatly improves operation efficiency for the shortcut key in the shortcut menu and user experience of operating the shortcut key.

Certainly, if the user does not expect to continue to perform the shortcut function of the selected shortcut key when performing the third phase of the sliding operation, the user may drag the selected shortcut key back to the shortcut menu, for example, drag the selected shortcut key back to an original location of the shortcut key in the shortcut menu. In this case, the mobile phone may stop performing the shortcut function of the selected shortcut key and deselect the selected shortcut key. Certainly, the user may alternatively trigger, by performing a specific gesture, for example, a pressing operation, the mobile phone to deselect the selected shortcut key. This is not limited in this embodiment of this application.

In addition, as shown in FIG. 20, the user may further enter a setting interface 2001 of the mobile phone to set a start sliding location 2002 for invoking the shortcut menu, a display location 2003 of the shortcut menu, specific content 2004 of the shortcut menu, and the like. The start sliding location 2002 may be any edge of the touchscreen or a portion of an edge. In addition, there may be a plurality of start sliding locations 2002. When there are a plurality of start sliding locations 2002, the user may separately set, for each start sliding location 2002, setting options such as a display location 2003 of a corresponding shortcut menu and specific content 2004 of the shortcut menu. In this way, the user can achieve customized user experience of directly enabling a shortcut function in one step.

It should be noted that the first phase, the second phase, and the third phase of the sliding operation in this embodiment of this application are merely intended to clearly describe various phases of the sliding operation. In a specific implementation process, when detecting a corresponding sliding operation, the mobile phone responds and performs a corresponding action, and the mobile phone does not need to determine whether a current operation is the first phase, the second phase, or the third phase of the sliding operation. For example, when the mobile phone detects a sliding operation in which sliding from a point on an edge of the screen toward the interior of the screen exceeds a preset distance, the mobile phone responds to the operation, and displays a shortcut menu including a shortcut key in a current interface, as described in S403. When the mobile phone further detects an operation pointing to a shortcut key (for example, S404 is performed), S405 may be performed, or S405 to S407 may be performed. In an entire process, the mobile phone may not need to determine whether a currently detected operation is the first phase, the second phase, or the third phase of the sliding operation.

In some embodiments of this application, an embodiment of this application discloses a terminal. As shown in FIG. 21, the terminal is configured to implement the methods described in the foregoing method embodiments. The terminal includes an obtaining unit 2101, a display unit 2102, and an execution unit 2103. The obtaining unit 2101 is configured to support the terminal in performing processes S402, S404, and S406 in FIG. 4. The display unit 2102 is configured to support the terminal in performing processes S401 and S403 in FIG. 4. The execution unit 2103 is configured to support the terminal in performing processes S405 and S407 in FIG. 4. All related content of the steps in the foregoing method embodiments may be cited in function descriptions of corresponding function modules. Details are not described herein again.

In some other embodiments of this application, an embodiment of this application discloses a terminal. As shown in FIG. 22, the terminal may include a touchscreen 2201, where the touchscreen 2201 includes a touch-sensitive surface 2206 and a display 2207; one or more processors 2202; a memory 2203; one or more applications (not shown); and one or more computer programs 2204. The foregoing components may be connected by using one or more communications buses 2205. The one or more computer programs 2204 are stored in the memory 2203 and are configured to be executed by the one or more processors 2202. The one or more computer programs 2204 include an instruction, and the instruction may be used to perform the steps in FIG. 4 and the corresponding embodiment.

In addition, an embodiment of this application further provides a graphical user interface (GUI) on a terminal. The graphical user interface specifically includes a graphical user interface displayed when the terminal performs any one of steps 401 to 407.

The foregoing descriptions about implementations allow a person skilled in the art to clearly understand that, for the purpose of convenient and brief description, only division into the foregoing function modules is used as an example for illustration. In actual application, the foregoing functions can be allocated to different function modules for implementation based on a requirement, that is, an inner structure of an apparatus is divided into different function modules to implement all or some of the functions described above. For a detailed working process of the foregoing system, apparatus, and unit, refer to a corresponding process in the foregoing method embodiments. Details are not described herein again.

Function units in the embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in a form of a software function unit and sold or used as an independent product, the integrated unit may be stored in a computer-readable storage medium. Based on such an understanding, the technical solutions of the embodiments of this application essentially, or the part contributing to the prior art, or all or some of the technical solutions may be implemented in a form of a software product. The computer software product is stored in a storage medium and includes several instructions for instructing a computer device (which may be a personal computer, a server, or a network device) or a processor to perform all or some of the steps of the methods described in the embodiments of this application. The foregoing storage medium includes any medium that can store program code, such as a flash memory, a removable hard disk, a read-only memory, a random access memory, a magnetic disk, or an optical disc.

## Claims

1. A shortcut key control method, comprising:
Displaying (S401), by a terminal (100), a first interface (501);
Receiving (S402), by the terminal (100), a first phase of a sliding operation entered by a user in the first interface (501), wherein a start location of a finger of the user in the first phase is a point on a first edge in the first interface (501), and an end location of the finger of the user in the first phase is a point away from the first edge in the first interface (501);
in response to the first phase of the sliding operation, displaying (S403), by the terminal (100), a shortcut menu (702) in the first interface (501), wherein the shortcut menu (702) comprises at least one shortcut key (1301);
receiving (S404), by the terminal (100), a second phase of the sliding operation entered by the user in the first interface (501), wherein a start location of the finger of the user in the second phase is the end location of the finger of the user in the first phase, and an end location of the finger of the user in the second phase is a first shortcut key (1301) in the shortcut menu (702); and
receiving (S406), by the terminal (100), a third phase of the sliding operation entered by the user in the first interface (501), wherein the third phase is a process in which the finger of the user drags the first shortcut key (1301), a start location of the finger of the user in the third phase is the end location of the finger of the user in the second phase, and an end location of the finger of the user in the third phase is a location at which the finger of the user leaves a touchscreen (104, 2201); and
in response to the third phase of the sliding operation, enabling (S407), by the terminal (100), the shortcut function corresponding to the first shortcut key (1301), wherein the first shortcut key (1301) is an icon of a second application; and
the enabling (S407), by the terminal (100), a shortcut function corresponding to the first shortcut key (1301) comprises:
if the terminal (100) detects that the user drags the icon of the second application to slide along a first direction in the third phase of the sliding operation, enabling, by the terminal (100), a first application function of the second application; or
if the terminal (100) detects that the user drags the icon of the second application to slide along a second direction in the third phase of the sliding operation, enabling, by the terminal (100), a second application function of the second application.

2. The shortcut key control method according to claim 1, wherein the displaying, by the terminal (100), a shortcut menu (702) in the first interface (501) comprises:
displaying, by the terminal (100), the shortcut menu (702) along a second edge in the first interface (501), wherein
the second edge is an edge closest to the start location of the finger of the user in the first phase, or the second edge is an edge closest to the end location of the finger of the user in the first phase.

3. The shortcut key control method according to claim 1 or 2, wherein the first shortcut key (1301) in the shortcut menu (702) is on an extended line of a sliding track of the first phase of the sliding operation.

4. The shortcut key control method according to any one of claims 1 to 3, wherein the first edge comprises a first portion and a second portion; and
the displaying (S403), by the terminal (100), a shortcut menu (702) in the first interface (501) comprises:
when the start location of the finger of the user in the first phase is in the first portion, displaying, by the terminal (100), a first shortcut menu (702, 1201) in the first interface (501); or
when the start location of the finger of the user in the first phase is in the second portion, displaying, by the terminal (100), a second shortcut menu (702, 1202) in the first interface (501).

5. The shortcut key control method according to any one of claims 1 to 4, wherein the first shortcut key (1301) comprises an icon of an application or an icon of an application function.

6. The shortcut key control method according to any one of claims 1 to 5, wherein first interface (501) is an interface of the second application.

7. The shortcut key control method according to any one of claims 1 to 6, wherein
the second phase of the sliding operation comprises a process in which the finger of the user slides from the end location of the finger of the user in the first phase to the first shortcut key (1301); or
the second phase of the sliding operation comprises a process in which the finger of the user slides from the end location of the finger of the user in the first phase to the first shortcut key (1301), and a process in which the finger of the user stays on the first shortcut key (1301) or presses the first shortcut key (1301).

8. The shortcut key control method according to any one of claims 1 to 7, after the receiving (S404), by the terminal (100), a second phase of the sliding operation entered by the user in the first interface (501), further comprising:
marking, by the terminal (100), the first shortcut key (1301) to a selected state.

9. The shortcut key control method according to any one of claims 1 to 8, wherein the enabling (S407), by the terminal (100), a shortcut function corresponding to the first shortcut key (1301) comprises:
when the second phase of the sliding operation ends, if the terminal (100) detects that the finger of the user leaves a touchscreen (104, 2201), enabling, by the terminal (100), the shortcut function corresponding to the first shortcut key (1301).

10. The shortcut key control method according to any one of claims 1 to 9, wherein content displayed in the first interface (501) does not support the shortcut function corresponding to the first shortcut key (1301); and
the enabling (S407), by the terminal (100), a shortcut function corresponding to the first shortcut key (1301) comprises:
in response to dragging performed by the user on the first shortcut key (1301) in the third phase of the sliding operation, gradually displaying, by the terminal (100), a second interface (1601) along a dragging direction, wherein the second interface (1601) is a shortcut function interface corresponding to the first shortcut key (1301).

11. The shortcut key control method according to any one of claims 1 to 10, wherein content displayed in the first interface (501) supports the shortcut function corresponding to the first shortcut key (1301); and
the enabling (S407), by the terminal (100), a shortcut function corresponding to the first shortcut key (1301) comprises:
performing, by the terminal (100) on displayed target content, the shortcut function corresponding to the first shortcut key (1301), wherein the displayed target content is content corresponding to the end location of the finger of the user in the third phase.

12. The shortcut key control method according to any one of claims 1 to 11, wherein the sliding operation is an operation that the finger of the user does not leave the touchscreen (104, 2201) and generates displacement on the touchscreen (104, 2201).

13. A terminal (100), comprising:
a touchscreen (104, 2201), wherein the touchscreen (104, 2201) comprises a touch-sensitive surface (104-1, 2206) and a display (104-2, 2207);
one or more processors (101, 2202);
one or more memories (103, 2203); and
one or more computer programs (2204), wherein the one or more computer programs (2204) are stored in the one or more memories (103, 2203), the one or more computer programs (2204) comprise an instruction, and when the instruction is executed by the terminal (100), the terminal (100) is enabled to perform the shortcut key control method according to any one of claims 1 to 12.

14. A computer-readable storage medium (103, 2203), wherein the computer-readable storage medium (103, 2203) stores an instruction, and when the instruction is run on a terminal (100), the terminal (100) is enabled to perform the shortcut key control method according to any one of claims 1 to 12.

## Patentansprüche

1. Verknüpfungselementsteuerungsverfahren, umfassend:
Anzeigen (S401), durch ein Endgerät (100), einer ersten Schnittstelle (501);
Empfangen (S402), durch das Endgerät (100), einer ersten Phase eines Schiebevorgangs, der von einem Benutzer in die erste Schnittstelle (501) eingegeben wird, wobei eine Startposition eines Fingers des Benutzers in der ersten Phase ein Punkt auf einer ersten Kante in der ersten Schnittstelle (501) ist und eine Endposition des Fingers des Benutzers in der ersten Phase ein Punkt ist, der von der ersten Kante in der ersten Schnittstelle (501) entfernt ist;
in Reaktion auf die erste Phase des Schiebevorgangs, Anzeigen (S403), durch das Endgerät (100), eines Kontextmenüs (702) in der ersten Schnittstelle (501), wobei das Kontextmenü (702) mindestens ein Verknüpfungselement (1301) umfasst;
Empfangen (S404), durch das Endgerät (100), einer zweiten Phase des Schiebevorgangs, der durch den Benutzer in der ersten Schnittstelle (501) eingegeben wird, wobei eine Startposition des Fingers des Benutzers in der zweiten Phase die Endposition des Fingers des Benutzers in der ersten Phase ist und eine Endposition des Fingers des Benutzers in der zweiten Phase ein erstes Verknüpfungselement (1301) in dem Kontextmenü (702) ist; und
Empfangen (S406), durch das Endgerät (100), einer dritten Phase des Schiebevorgangs, der durch den Benutzer in die erste Schnittstelle (501) eingegeben wird, wobei die dritte Phase ein Prozess ist, bei dem der Finger des Benutzers das erste Verknüpfungselement (1301) zieht, eine Startposition des Fingers des Benutzers in der dritten Phase die Endposition des Fingers des Benutzers in der zweiten Phase ist und eine Endposition des Fingers des Benutzers in der dritten Phase eine Position ist, an welcher der Finger des Benutzers einen Berührungsbildschirm (104, 2201) verlässt; und
als Reaktion auf die dritte Phase des Schiebevorgangs, Aktivieren (S407), durch das Endgerät (100), der Verknüpfungsfunktion, die dem ersten Verknüpfungselement (1301) entspricht, wobei das erste Verknüpfungselement (1301) ein Symbol einer zweiten Anwendung ist; und
das Aktivieren (S407), durch das Endgerät (100), einer Verknüpfungsfunktion, die dem ersten Verknüpfungselement (1301) entspricht, Folgendes umfasst:
wenn das Endgerät (100) erkennt, dass der Benutzer das Symbol der zweiten Anwendung zieht, um es in der dritten Phase des Schiebevorgangs entlang einer ersten Richtung zu schieben, Aktivieren, durch das Endgerät (100), einer ersten Anwendungsfunktion der zweiten Anwendung; oder
wenn das Endgerät (100) erkennt, dass der Benutzer das Symbol der zweiten Anwendung zieht, um es in der dritten Phase des Schiebevorgangs entlang einer zweiten Richtung zu schieben, Aktivieren, durch das Endgerät (100), einer zweiten Anwendungsfunktion der zweiten Anwendung.

2. Verknüpfungselementsteuerungsverfahren nach Anspruch 1, wobei das Anzeigen, durch das Endgerät (100), eines Kontextmenüs (702) in der ersten Schnittstelle (501) Folgendes umfasst:
Anzeigen, durch das Endgerät (100), des Kontextmenüs (702) entlang einer zweiten Kante in der ersten Schnittstelle (501), wobei
die zweite Kante eine Kante ist, die der Startposition des Fingers des Benutzers in der ersten Phase am nächsten liegt, oder die zweite Kante eine Kante ist, die der Endposition des Fingers des Benutzers in der ersten Phase am nächsten liegt.

3. Verknüpfungselementsteuerungsverfahren nach Anspruch 1 oder 2, wobei das erste Verknüpfungselement (1301) in dem Kontextmenü (702) auf einer erweiterten Linie einer Schiebespur der ersten Phase des Schiebevorgangs ist.

4. Verknüpfungselementsteuerungsverfahren nach einem der Ansprüche 1 bis 3, wobei die erste Kante einen ersten Abschnitt und einen zweiten Abschnitt umfasst; und
das Anzeigen (S403), durch das Endgerät (100), eines Kontextmenüs (702) in der ersten Schnittstelle (501) Folgendes umfasst:
wenn sich die Startposition des Fingers des Benutzers in der ersten Phase in dem ersten Abschnitt befindet, Anzeigen, durch das Endgerät (100), eines ersten Kontextmenüs (702, 1201) in der ersten Schnittstelle (501); oder
wenn sich die Startposition des Fingers des Benutzers in der ersten Phase in dem zweiten Abschnitt befindet, Anzeigen, durch das Endgerät (100), eines zweiten Kontextmenüs (702, 1202) in der ersten Schnittstelle (501).

5. Verknüpfungselementsteuerungsverfahren nach einem der Ansprüche 1 bis 4, wobei das erste Verknüpfungselement (1301) ein Symbol einer Anwendung oder ein Symbol einer Anwendungsfunktion umfasst.

6. Verknüpfungselementsteuerungsverfahren nach einem der Ansprüche 1 bis 5, wobei die erste Schnittstelle (501) eine Schnittstelle der zweiten Anwendung ist.

7. Verknüpfungselementsteuerungsverfahren nach einem der Ansprüche 1 bis 6, wobei
die zweite Phase des Schiebevorgangs einen Prozess umfasst, bei dem sich der Finger des Benutzers von der Endposition des Fingers des Benutzers in der ersten Phase zu dem ersten Verknüpfungselement (1301) schiebt; oder
die zweite Phase des Schiebevorgangs einen Prozess, bei dem sich der Finger des Benutzers von der Endposition des Fingers des Benutzers in der ersten Phase zu dem ersten Verknüpfungselement (1301) schiebt, und einen Prozess, bei dem der Finger des Benutzers auf dem ersten Verknüpfungselement (1301) bleibt oder das erste Verknüpfungselement (1301) drückt, umfasst.

8. Verknüpfungselementsteuerungsverfahren nach einem der Ansprüche 1 bis 7, nach dem Empfangen (S404), durch das Endgerät (100), einer zweiten Phase des Schiebevorgangs, der durch den Benutzer in der ersten Schnittstelle (501) eingegeben wird, ferner umfassend:
Markieren, durch das Endgerät (100), des ersten Verknüpfungselements (1301) in einem ausgewählten Zustand.

9. Verknüpfungselementsteuerungsverfahren nach einem der Ansprüche 1 bis 8, wobei das Aktivieren (S407), durch das Endgerät (100), einer Verknüpfungsfunktion, die dem ersten Verknüpfungselement (1301) entspricht, Folgendes umfasst:
wenn die zweite Phase des Schiebevorgangs endet, wenn das Endgerät (100) erkennt, dass der Finger des Benutzers einen Berührungsbildschirm (104, 2201) verlässt, Aktivieren, durch das Endgerät (100), der Verknüpfungsfunktion, die dem ersten Verknüpfungselement (1301) entspricht.

10. Verknüpfungselementsteuerungsverfahren nach einem der Ansprüche 1 bis 9, wobei Inhalt, der in der ersten Schnittstelle (501) angezeigt wird, die Verknüpfungsfunktion, die dem ersten Verknüpfungselement (1301) entspricht, nicht unterstützt; und das Aktivieren (S407), durch das Endgerät (100), einer Verknüpfungsfunktion, die dem ersten Verknüpfungselement (1301) entspricht, Folgendes umfasst:
in Reaktion auf das Ziehen, das von dem Benutzer an dem ersten Verknüpfungselement (1301) in der dritten Phase des Schiebevorgangs durchgeführt wird, allmähliches Anzeigen, durch das Endgerät (100), einer zweiten Schnittstelle (1601) entlang einer Ziehrichtung, wobei die zweite Schnittstelle (1601) eine Verknüpfungsfunktionsschnittstelle ist, die dem ersten Verknüpfungselement (1301) entspricht.

11. Verknüpfungselementsteuerungsverfahren nach einem der Ansprüche 1 bis 10, wobei der Inhalt, der in der ersten Schnittstelle (501) angezeigt wird, die Verknüpfungsfunktion, die dem ersten Verknüpfungselement (1301) entspricht, unterstützt; und
das Aktivieren (S407), durch das Endgerät (100), einer Verknüpfungsfunktion, die dem ersten Verknüpfungselement (1301) entspricht, Folgendes umfasst:
Durchführen, durch das Endgerät (100) auf angezeigtem Zielinhalt, der Verknüpfungsfunktion, die dem ersten Verknüpfungselement (1301) entspricht, wobei der angezeigte Zielinhalt Inhalt ist, welcher der Endposition des Fingers des Benutzers in der dritten Phase entspricht.

12. Verknüpfungselementsteuerungsverfahren nach einem der Ansprüche 1 bis 11, wobei der Schiebevorgang ein Vorgang ist, bei dem der Finger des Benutzers den Berührungsbildschirm (104, 2201) nicht verlässt und eine Verschiebung auf dem Berührungsbildschirm (104, 2201) erzeugt.

13. Endgerät (100), umfassend:
einen Berührungsbildschirm (104, 2201), wobei der Berührungsbildschirm (104, 2201) eine berührungsempfindliche Oberfläche (104-1, 2206) und eine Anzeige (104-2, 2207) umfasst;
einen oder mehrere Prozessoren (101, 2202);
einen oder mehrere Speicher (103, 2203); und
ein oder mehrere Computerprogramme (2204), wobei das eine oder die mehreren Computerprogramme (2204) in dem einen oder den mehreren Speichern (103, 2203) gespeichert sind, das eine oder die mehreren Computerprogramme (2204) eine Anweisung umfassen und, wenn die Anweisung durch das Endgerät (100) ausgeführt wird, das Endgerät (100) in die Lage versetzt wird, das Verknüpfungselementsteuerungsverfahren nach einem der Ansprüche 1 bis 12 durchzuführen.

14. Computerlesbares Speichermedium (103, 2203), wobei das computerlesbare Speichermedium (103, 2203) eine Anweisung speichert und, wenn die Anweisung auf einem Endgerät (100) ausgeführt wird, das Endgerät (100) in die Lage versetzt wird, das Verknüpfungselementsteuerungsverfahren nach einem der Ansprüche 1 bis 12 durchzuführen.

## Revendications

1. Procédé de commande de touches de raccourci, comprenant :
l'affichage (S401), par un terminal (100), d'une première interface (501) ;
la réception (S402), par le terminal (100), d'une première phase d'une opération de glissement entrée par un utilisateur dans la première interface (501), dans lequel un emplacement de début d'un doigt de l'utilisateur dans la première phase est un point sur un premier bord dans la première interface (501), et un emplacement de fin du doigt de l'utilisateur dans la première phase est un point éloigné du premier bord dans la première interface (501) ;
en réponse à la première phase de l'opération de glissement, l'affichage (S403), par le terminal (100), d'un menu de raccourcis (702) dans la première interface (501), dans lequel le menu de raccourcis (702) comprend au moins une touche de raccourci (1301) ;
la réception (S404), par le terminal (100), d'une deuxième phase de l'opération de glissement entrée par l'utilisateur dans la première interface (501), dans lequel un emplacement de début du doigt de l'utilisateur dans la deuxième phase est l'emplacement de fin du doigt de l'utilisateur dans la première phase, et un emplacement de fin du doigt de l'utilisateur dans la deuxième phase est une première touche de raccourci (1301) dans le menu de raccourcis (702) ; et
la réception (S406), par le terminal (100), d'une troisième phase de l'opération de glissement entrée par l'utilisateur dans la première interface (501), dans lequel la troisième phase est un processus dans lequel le doigt de l'utilisateur fait glisser la première touche de raccourci (1301), un emplacement de début du doigt de l'utilisateur dans la troisième phase est l'emplacement de fin du doigt de l'utilisateur dans la deuxième phase, et un emplacement de fin du doigt de l'utilisateur dans la troisième phase est un emplacement où le doigt de l'utilisateur quitte un écran tactile (104, 2201) ; et
en réponse à la troisième phase de l'opération de glissement, l'activation (S407), par le terminal (100), de la fonction de raccourci correspondant à la première touche de raccourci (1301), dans lequel la première touche de raccourci (1301) est une icône d'une seconde application ; et
l'activation (S407), par le terminal (100), d'une fonction de raccourci correspondant à la première touche de raccourci (1301) comprend :
si le terminal (100) détecte que l'utilisateur fait glisser l'icône de la seconde application dans une première direction dans la troisième phase de l'opération de glissement, l'activation, par le terminal (100), d'une première fonction d'application de la seconde application ; ou
si le terminal (100) détecte que l'utilisateur fait glisser l'icône de la seconde application dans une seconde direction dans la troisième phase de l'opération de glissement, l'activation, par le terminal (100), d'une seconde fonction d'application de la seconde application.

2. Procédé de commande de touche de raccourci selon la revendication 1, dans lequel l'affichage, par le terminal (100), d'un menu de raccourcis (702) dans la première interface (501) comprend :
l'affichage, par le terminal (100), du menu de raccourcis (702) le long d'un second bord dans la première interface (501), dans lequel
le second bord est un bord le plus proche de l'emplacement de début du doigt de l'utilisateur dans la première phase, ou le second bord est un bord le plus proche de l'emplacement de fin du doigt de l'utilisateur dans la première phase.

3. Procédé de commande de touches de raccourci selon la revendication 1 ou 2, dans lequel la première touche de raccourci (1301) du menu de raccourcis (702) se trouve sur une ligne étendue d'une piste de glissement de la première phase de l'opération de glissement.

4. Procédé de commande de touches de raccourci selon l'une quelconque des revendications 1 à 3, dans lequel le premier bord comprend une première partie et une seconde partie ; et
l'affichage (S403), par le terminal (100), d'un menu de raccourcis (702) dans la première interface (501) comprend :
lorsque l'emplacement de début du doigt de l'utilisateur dans la première phase est dans la première partie, l'affichage, par le terminal (100), d'un premier menu de raccourcis (702, 1201) dans la première interface (501) ; ou
lorsque l'emplacement de début du doigt de l'utilisateur dans la première phase est dans la seconde partie, l'affichage, par le terminal (100), d'un second menu de raccourcis (702, 1202) dans la première interface (501).

5. Procédé de commande de touches de raccourci selon l'une quelconque des revendications 1 à 4, dans lequel la première touche de raccourci (1301) comprend une icône d'une application ou une icône d'une fonction d'application.

6. Procédé de commande de touches de raccourci selon l'une quelconque des revendications 1 à 5, dans lequel la première interface (501) est une interface de la seconde application.

7. Procédé de commande de touches de raccourci selon l'une quelconque des revendications 1 à 6, dans lequel
la deuxième phase de l'opération de glissement comprend un processus dans lequel le doigt de l'utilisateur glisse de l'emplacement de fin du doigt de l'utilisateur dans la première phase vers la première touche de raccourci (1301) ; ou
la deuxième phase de l'opération de glissement comprend un processus dans lequel le doigt de l'utilisateur glisse de l'emplacement de fin du doigt de l'utilisateur dans la première phase vers la première touche de raccourci (1301), et un processus dans lequel le doigt de l'utilisateur reste sur la première touche de raccourci (1301) ou appuie sur la première touche de raccourci (1301).

8. Procédé de commande de touche de raccourci selon l'une quelconque des revendications 1 à 7, après réception (S404), par le terminal (100), d'une deuxième phase de l'opération de glissement entrée par l'utilisateur dans la première interface (501), comprenant également :
le marquage, par le terminal (100), de la première touche de raccourci (1301) à un état sélectionné.

9. Procédé de commande de touches de raccourci selon l'une quelconque des revendications 1 à 8, dans lequel l'activation (S407), par le terminal (100), d'une fonction de raccourci correspondant à la première touche de raccourci (1301) comprend :
lorsque la deuxième phase de l'opération de glissement se termine, si le terminal (100) détecte que le doigt de l'utilisateur quitte un écran tactile (104, 2201), l'activation, par le terminal (100), de la fonction de raccourci correspondant à la première touche de raccourci (1301).

10. Procédé de commande de touches de raccourci selon l'une quelconque des revendications 1 à 9, dans lequel le contenu affiché dans la première interface (501) ne prend pas en charge la fonction de raccourci correspondant à la première touche de raccourci (1301) ; et
l'activation (S407), par le terminal (100), d'une fonction de raccourci correspondant à la première touche de raccourci (1301) comprend :
en réponse à un glissement réalisé par l'utilisateur sur la première touche de raccourci (1301) dans la troisième phase de l'opération de glissement, l'affichage progressif, par le terminal (100), d'une seconde interface (1601) le long d'une direction de glissement, dans lequel la seconde interface (1601) est une interface de fonction de raccourci correspondant à la première touche de raccourci (1301).

11. Procédé de commande de touches de raccourci selon l'une quelconque des revendications 1 à 10, dans lequel le contenu affiché dans la première interface (501) prend en charge la fonction de raccourci correspondant à la première touche de raccourci (1301) ; et
l'activation (S407), par le terminal (100), d'une fonction de raccourci correspondant à la première touche de raccourci (1301) comprend :
la réalisation, par le terminal (100) sur un contenu cible affiché, de la fonction de raccourci correspondant à la première touche de raccourci (1301), dans lequel le contenu cible affiché est un contenu correspondant à l'emplacement de fin du doigt de l'utilisateur dans la troisième phase.

12. Procédé de commande de touches de raccourci selon l'une quelconque des revendications 1 à 11, dans lequel l'opération de glissement est une opération selon laquelle le doigt de l'utilisateur ne quitte pas l'écran tactile (104, 2201) et génère un déplacement sur l'écran tactile (104, 2201).

13. Terminal (100), comprenant :
un écran tactile (104, 2201), dans lequel l'écran tactile (104, 2201) comprend une surface tactile (104-1, 2206) et un affichage (104-2, 2207) ;
un ou plusieurs processeurs (101, 2202) ;
une ou plusieurs mémoires (103, 2203) ; et
un ou plusieurs programmes informatiques (2204), dans lequel les un ou plusieurs programmes informatiques (2204) sont stockés dans les une plusieurs mémoires (103, 2203), les un ou plusieurs programmes informatiques (2204) comprennent une instruction, et lorsque l'instruction est exécutée par le terminal (100), cela permet au terminal (100) de mettre en œuvre le procédé de commande de touches de raccourci selon l'une quelconque des revendications 1 à 12.

14. Support de stockage lisible par ordinateur (103, 2203), dans lequel le support de stockage lisible par ordinateur (103, 2203) stocke une instruction, et lorsque l'instruction est exécutée sur un terminal (100), cela permet au terminal (100) de mettre en œuvre le procédé de commande de touches de raccourci selon l'une quelconque des revendications 1 à 12.
